# EUROPÄISCHE PATENTSCHRIFT

(11) **EP 4 414 626 B1**
(45) Veröffentlichungstag und Bekanntmachung des Hinweises auf die Patenterteilung: **08.10.2025**
(21) Anmeldenummer: 24156392.3
(22) Anmeldetag: 07.02.2024
(51) Int. Cl.: F24S 25/12, F24S 25/16, F24S 30/425, H02S 20/10, H02S 20/30

(54) **SOLARANLAGENAUFSTÄNDERVORRICHTUNG FÜR EIN SOLARANLAGENSYSTEM**
SOLAR SYSTEM MOUNTING DEVICE FOR A SOLAR SYSTEM
DISPOSITIF DE SUPPORT POUR UN SYSTÈME D'ÉNERGIE SOLAIRE

(30) Priorität: 10.02.2023 DE 102023103311
(43) Veröffentlichungstag der Anmeldung: 14.08.2024
(73) Patentinhaber: Zimmermann, Robert, 88436 Eberhardzell (DE)
(72) Erfinder: Zimmermann, Robert, 88436 Eberhardzell (DE)
(74) Vertreter: Daub, Thomas

(56) Entgegenhaltungen:
- CN-A- 113 073 675
- CN-A- 115 001 363
- DE-U1- 202009 014 008
- KR-B1- 102 067 959
- US-B2- 10 404 206

## Beschreibung

### Stand der Technik

Die Erfindung betrifft eine Solaranlagenaufständervorrichtung nach dem Oberbegriff des Anspruchs 1.

Es ist bereits eine Solaranlagenaufständervorrichtung mit einer ersten Aufständerungsreihe an Stützelementen, die an dem Untergrund befestigt sind, und mit einer zweiten Aufständerungsreihe an Stützelementen, die an dem Untergrund befestigt sind und die in einer Querrichtung beabstandet zu der ersten Aufständerungsreihe an Stützelementen angeordnet sind, vorgeschlagen worden.

Die Druckschrift CN 115 001 363 A offenbart eine Solaranlagenaufständervorrichtung mit einer ersten Aufständerungsreihe an Stützelementen, die an dem Untergrund befestigt sind, und mit einer zweiten Aufständerungsreihe an Stützelementen, die an dem Untergrund befestigt sind und die in einer Querrichtung beabstandet zu der ersten Aufständerungsreihe an Stützelementen angeordnet sind, mit einem Versteifungsmodul, über das die Stützelemente der ersten Aufständerungsreihe und die Stützelemente der zweiten Aufständerungsreihe direkt miteinander verbunden sind.

Die Druckschrift KR 102 067 959 B1 offenbart eine Solaranlagenaufständervorrichtung gemäß dem Oberbegriff des Anspruchs 1.

Die Aufgabe der Erfindung besteht insbesondere darin, eine gattungsgemäße Vorrichtung mit verbesserten Eigenschaften hinsichtlich einer Abstützung von Seitenkräften und einer Vermeidung von Rotationsmomenten in einem Boden verankerten Stützelementen bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Solaranlagenaufständervorrichtung, insbesondere zur Aufstellung auf einem weichen Untergrund, mit einer ersten Aufständerungsreihe an Stützelementen, die an dem Untergrund befestigt sind, und mit einer zweiten Aufständerungsreihe an Stützelementen, die an dem Untergrund befestigt sind und die in einer Querrichtung beabstandet zu der ersten Aufständerungsreihe an Stützelementen angeordnet sind, mit einem Versteifungsmodul, über das die Stützelemente der ersten Aufständerungsreihe und die Stützelemente der zweiten Aufständerungsreihe direkt miteinander verbunden sind, und das dazu vorgesehen ist, auf eine Aufständerungsreihe wirkende Seitenkräfte an der anderen Aufständerungsreihe abzustützen, um Rotationsmomente in den Stützelementen zu verringern, vorzugsweise zu verhindern.

Es wird vorgeschlagen, dass das Versteifungsmodul eine erste Versteifungseinheit aufweist, die jeweils ein Stützelementpaar der beiden Aufständerungsreihen miteinander verbindet und dazu zwei Querversteifungselemente aufweist, die jeweils zwischen zwei der Stützelemente der beiden Aufständerungsreihen angeordnet sind, wobei die Versteifungseinheit je Aufständerungsreihe ein Fachwerkmodul aufweist, das die Stützelemente des entsprechenden Stützelementpaars miteinander und mit den Querversteifungselementen verbindet. Unter einer "Solaranlagenaufständervorrichtung" soll eine Vorrichtung verstanden werden, mittels der Solarmodule auf einem Untergrund aufgestellt werden können. Die Solaranlagenaufständervorrichtung bildet eine tragende Struktur aus, mittels der die Solarmodule an dem Untergrund befestigt sind. Über die Solaranlagenaufständervorrichtung werden die Gewichtskraft der Solarmodule und weitere auf die Solarmodule wirkende Kräfte, wie beispielsweise Windkräfte in den Untergrund abgeleitet. Unter einem "weichen Untergrund" soll vorzugsweise ein Moorboden oder ein Boden verstanden werden, der mit einem Moorboden vergleichbare Eigenschaften aufweist. Insbesondere weist der weiche Untergrund ein im Vergleich zu einem normalen Erdboden, wie Braun- oder Schwarzerde einen geringeren Widerstand gegen Einsinken auf. Unter einer "Aufständerungsreihe" soll vorzugsweise eine entlang einer Längsachse verlaufende Anordnung an Stützelementen verstanden werden, an der Solarmodule in einer Reihe auf einem Untergrund aufstellbar sind. Unter einem "Stützelement" soll vorzugsweise ein Element verstanden werden, dass fest mit dem Untergrund verbunden ist. Vorzugsweise ist das Stützelement in den Boden eingebracht. Das Stützelement ist als ein länglicher Träger ausgebildet, der dazu vorgesehen ist, entlang seiner Längsachse in den Boden eingebracht zu werden. Vorzugsweise ist ein Stützelement als ein Rammprofil ausgebildet, das zur Befestigung an dem Untergrund dazu vorgesehen ist, in den Untergrund gerammt zu werden. Unter "an dem Untergrund befestigt" soll vorzugsweise so mit dem Untergrund verbunden verstanden werden, dass Kräfte, vorzugsweise zumindest vertikal wirkende Kräfte, sowie seitlich wirkende Kräfte, in den Untergrund abgeleitet werden können. Vorzugsweise sind an dem Untergrund befestigte Elemente, wie die Stützelemente in den Boden eingebracht, also insbesondere eingerammt, oder eingedreht. Unter einem "Versteifungsmodul" soll ein Modul verstanden werden, das die beiden Aufständerungsreihen an mehreren Stellen miteinander direkt verbindet, sodass Kräfte zwischen den beiden Aufständerungsreihen abgestützt werden können. Das Versteifungsmodul ist dazu vorgesehen, Seitenkräfte abzustützen. Das Versteifungsmodul ist dazu vorgesehen, die Solaranlagenaufständervorrichtung, insbesondere in Querrichtung, zu versteifen. Unter "direkt miteinander verbunden" soll vorzugsweise über eine kraft-, form- und/oder stoffschlüssige Verbindung unmittelbar miteinander verbunden verstanden werden. Zwei direkt miteinander verbundene Elemente können beispielsweise mittels einer oder mehrerer Schrauben, oder mittels einer Schweißverbindung direkt miteinander verbunden sein. Unter "Seitenkräften" sollen Kräfte verstanden werden, die in einer Querrichtung auf die Solaranlagenaufständervorrichtung, insbesondere die Aufständerungsreihen wirken, verstanden werden. Die auf die Solaranlagenaufständervorrichtung wirkenden Seitenkräfte können insbesondere von auf die an die Solaranlagenaufständervorrichtung angebundenen Solarelemente wirkende Windkräfte erzeugt werden. Darunter, dass "Rotationsmomente in den Stützelementen verringert werden sollen" soll verstanden werden, dass die durch die Seitenkräfte erzeugten Rotationsmomente durch das Versteifungsmodul an der anderen Aufständerungsreihe an Stützelementen abgestützt werden, dass in einem Bereich unterhalb des Versteifungsmoduls, insbesondere unterhalb der Querversteifungselemente, Rotationsmomente in den Stützelementen möglichst klein gehalten werden. Besonders bevorzugt wird ein Rotationsmoment in den Stützelementen unterhalb des Versteifungsmoduls, insbesondere unterhalb der Querversteifungselemente verhindert. Unter "vorgesehen" soll insbesondere ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Versteifungseinheit" soll vorzugsweise ein Teil des Versteifungsmoduls verstanden werden, der die beiden Aufständerungsreihen in einem Teilbereich miteinander verbindet und so versteift. Eine Versteifungseinheit bildet eine separate Einheit des Versteifungsmoduls aus. Das Versteifungsmodul weist je nach Länge der Solaranlagenaufständervorrichtung eine unterschiedliche Anzahl an Versteifungseinheiten auf. Je länger die Solaranlagenaufständervorrichtung ausgebildet ist, desto mehr Versteifungseinheiten weist das Versteifungsmodul auf. Unter einem "Stützelementpaar" soll ein Paar von zwei benachbart angeordneten Stützelementen verstanden werden, die vorzugsweise entlang einer Längsachse der Aufständerungsreihe beabstandet zueinander angeordnet sind. Unter einem "Querversteifungselement" soll ein steifes Trägerelement verstanden werden, das zur Versteifung dazu vorgesehen ist, zwei Elemente, insbesondere zwei Stützelemente von zwei benachbarten Aufständerungsreihen direkt miteinander zu verbinden, sodass auf das eine Stützelement wirkende Kräfte an dem gegenüberliegenden Stützelement abgestützt werden können. Das Querversteifungselement ist vorzugsweise als ein länglicher Träger ausgebildet. Das Querversteifungselement weist vorzugsweise einen rechteckigen Querschnitt auf. Das Querversteifungselement ist vorzugsweise als ein Hohlträger ausgebildet. Das Querversteifungselement ist vorzugsweise als ein länglicher Metallträger, beispielsweise ein Stahlträger ausgebildet. Grundsätzlich wäre es auch denkbar, dass das Querversteifungselement als ein Träger aus einem anderen Material gebildet ist. Vorzugsweise ist dabei insbesondere denkbar, dass das Querversteifungselement aus einem anderen Metall, beispielsweise aus einem Aluminium gebildet ist. Unter "zwischen zwei Stützelementen der beiden Aufständerungsreihen angeordnet" soll vorzugsweise verstanden werden, dass das Querversteifungselement funktionstechnisch zwischen den jeweiligen Stützelementen angeordnet ist, wobei das Querversteifungselement jeweils starr mit dem jeweiligen Stützelement verbunden ist, sodass eine Kraft von dem jeweiligen Stützelement in das Querversteifungselement abgeleitet werden kann. Das Querversteifungselement ist form-, kraft- und/oder stoffschlüssig mit den Stützelementen verbunden. Vorzugsweise ist das Querversteifungselement mit den Stützelementen jeweils verschraubt oder verschweißt. Grundsätzlich wäre es auch denkbar, dass das Querversteifungselement mit den Stützelementen vernietet ist. Dadurch kann das Versteifungsmodul zur Abstützung von Seitenkräften besonders vorteilhaft ausgebildet werden.

Unter einem "Fachwerkmodul" soll vorzugsweise ein Modul verstanden werden, das mehrere Verstrebungselemente aufweist, die zumindest teilweise mit den Stützelementen und/oder Querverseifungselementen ein Dreieck bilden, durch das Kräfte abgeleitet werden können. Dadurch kann die Versteifungseinheit besonders vorteilhaft ausgebildet werden, um Seitenkräfte in die Querversteifungselemente abzuleiten.

Es wird weiterhin vorgeschlagen, dass das Fachwerkmodul zumindest zwei Querverstrebungselemente aufweist, die jeweils zwischen einem oberen Ende eines entsprechenden Stützelements und dem Querversteifungselement fest angeordnet sind. Unter einem "Querverstrebungselement" soll vorzugsweise ein Verstrebungselement verstanden werden, das sich zumindest im Wesentlichen in Querrichtung erstreckt. Unter einem "oberen Ende" soll ein dem Untergrund abgewandtes Ende, insbesondere ein abgewandter Endbereich eines Stützelements verstanden werden. Unter einem "Verstrebungselement" soll vorzugsweise ein steifes Trägerelement verstanden werden, dass zur Versteifung dazu vorgesehen ist, zwei Elemente direkt miteinander zu verbinden. Das Verstrebungselement ist vorzugsweise als ein länglicher Träger ausgebildet. Das Verstrebungselement weist vorzugsweise einen rechteckigen Querschnitt auf. Das Verstrebungselement ist vorzugsweise als ein Hohlträger ausgebildet. Das Verstrebungselement ist vorzugsweise als ein länglicher Metallträger, beispielsweise ein Stahlträger ausgebildet. Grundsätzlich wäre es auch denkbar, dass das Verstrebungselement als ein Träger aus einem anderen Material gebildet ist. Vorzugsweise ist dabei insbesondere denkbar, dass das Verstrebungselement aus einem anderen Metall, beispielsweise aus einem Aluminium gebildet ist. Unter "fest angeordnet" soll mittels einer form-, kraft-, und/oder stoffschlüssigen Verbindung starr miteinander verbunden verstanden werden. Dadurch kann das Fachwerkmodul besonders vorteilhaft ausgebildet werden.

Des Weiteren wird vorgeschlagen, dass das Fachwerkmodul zumindest ein erstes Längsverstrebungselement, das funktional zwischen den beiden Stützelementen fest angeordnet ist, und ein zweites Längsverstrebungselement aufweist, das in Querrichtung zu den Stützelementen beabstandet zwischen den beiden Querversteifungselementen funktional angeordnet ist. Unter einem "Längsverstrebungselement" soll vorzugsweise ein Verstrebungselement verstanden werden, das sich im Wesentlichen in einer Längsrichtung der Solaranlagenaufständervorrichtung erstreckt. Dadurch kann das Fachwerkmodul in Längsrichtung besonders vorteilhaft ausgesteift ausgebildet werden.

Weiterhin wird vorgeschlagen, dass das Fachwerkmodul ein drittes Querverstrebungselement aufweist, das im Wesentlichen mittig zwischen den beiden Stützelementen funktional zwischen dem ersten Längsverstrebungselement und dem zweiten Längsverstrebungselement angeordnet ist. Unter "im Wesentlichen mittig" soll vorzugsweise verstanden werden, dass das Querverstrebungselement vorzugsweise genau mittig zwischen den zwei Stützelementen angeordnet ist, aber auch in einem Bereich, der weniger als 10% des gesamten Abstands zwischen den Stützelementen entspricht, um den Mittelpunkt herum angeordnet sein kann. Dadurch kann das Fachwerkmodul besonders starr ausgebildet werden.

Außerdem wird vorgeschlagen, dass das Fachwerkmodul ein drittes Längsverstrebungselement aufweist, das unterhalb des ersten Längsverstrebungselements funktional zwischen den beiden Stützelementen fest angeordnet ist, und zumindest ein Vertikalverstrebungselement aufweist, das funktional zwischen dem ersten Längsverstrebungselement und dem dritten Längsverstrebungselement angeordnet ist. Dadurch kann das Fachwerkmodul die beiden Stützelemente eines Stützelementpaars besonders vorteilhaft gegeneinander abstützten.

Es wird weiter vorgeschlagen, dass das Fachwerkmodul zwei Vertikalverstrebungselemente aufweist, die mit einem ersten Ende in einem Mittelbereich des ersten Längsversteifungselements angebunden sind und mit ihrem zweiten Ende jeweils an gegenüberliegenden, dem jeweiligen Stützelement zugewandten Enden des dritten Längsverstrebungselements angebunden sind. Unter einem "Vertikalverstrebungselement" soll vorzugsweise ein Verstrebungselement verstanden werden, das sich zumindest im Wesentlichen in einer Vertikalrichtung erstreckt. Dadurch kann das Fachwerkmodul besonders vorteilhaft Vertikalkräfte weiterleiten.

Zudem wird vorgeschlagen, dass das erste Längsverstrebungselement zumindest ein Solarmodulanbindungselement aufweist, das vorzugsweise in einem Mittelbereich eines ersten Längsverstrebungselements eines Fachwerkmoduls fest angebunden ist. Unter einem "Solarmodulanbindungselement" soll vorzugsweise ein Anbindungselement verstanden werden, mittels dem Solarmodule über entsprechende Haltevorrichtungen mit der Solaranlagenaufständervorrichtung verbunden werden können. Das Solarmodulanbindungselement ist vorzugsweise als ein Halteelement ausgebildet, das zur drehbaren Aufnahme eines Achselements der Haltevorrichtung vorgesehen ist. Unter einem "Mittelbereich" soll vorzugsweise ein Bereich verstanden werden, der um die Mitte eines Elements, insbesondere des Längsverstrebungselements erstreckt. Dadurch kann besonders vorteilhaft eine Anbindung für Solarmodule bereitgestellt werden.

Weiter wird vorgeschlagen, dass das Versteifungsmodul weitere erste Versteifungseinheiten aufweist, die jeweils vorzugsweise jeweils einen Abstand von 6 m bis 12 m von den jeweils benachbarten Versteifungseinheiten aufweisen. Unter weiteren "Versteifungseinheiten" sollen vorzugsweise separat ausgebildete Versteifungseinheiten verstanden werden, die im Wesentlichen gleich ausgebildet sind wie die erste Versteifungseinheit. Das Versteifungsmodul weist in Abhängigkeit einer Gesamtlänge der Solaranlagenaufständervorrichtung eine unterschiedliche Anzahl an Versteifungseinheiten auf. Dadurch kann das Versteifungsmodul besonders vorteilhaft ausgebildet und durch die Auswahl unterschiedlicher Abstände einfach an unterschiedliche Untergrundbeschaffenheiten angepasst werden.

Ferner wird vorgeschlagen, dass das Versteifungsmodul eine zentrale Versteifungseinheit aufweist, die jeweils eine Stützelementgruppe von drei Stützelementen der beiden Aufständerungsreihen miteinander verbindet und dazu drei Querversteifungselemente aufweist, die jeweils zwischen zwei der Stützelemente der beiden Aufständerungsreihen angeordnet sind. Unter einer "zentralen Versteifungseinheit" soll vorzugsweise eine Versteifungseinheit verstanden werden, an der vorzugsweise eine Antriebseinheit zur Rotation der Solarmodule angebunden ist. Vorzugsweise ist die zentrale Versteifungseinheit in Längsrichtung der Solaranlagenaufständervorrichtung mittig angeordnet. Grundsätzlich wäre es auch denkbar, dass die zentrale Versteifungseinheit außermittig angeordnet ist. Die zentrale Versteifungseinheit ist vorteilhaft so ausgebildet, dass eine Antriebseinheit mit aufgeständert werden kann.

Es wird weiterhin vorgeschlagen, dass die mittleren Stützelemente der Stützelementgruppen als ein Doppelstützelement ausgebildet sind. Unter einem "Doppelstützelement" soll vorzugsweise ein Stützelement verstanden werden, das aus zwei unmittelbar nebeneinander angeordneten Stützelementen ausgebildet ist. Die Stützelemente des Doppelstützelements weisen vorteilhaft einen Abstand von weniger als 0,5m zueinander auf. Die Stützelemente, die ein Doppelstützelement ausbilden, sind vorzugsweise gleich ausgebildet wie die restlichen Stützelemente der Aufständerungsreihe. Dadurch kann das mittlere Stützelement besonders stabil ausgebildet werden, um Gewichtskräfte der Antriebseinheit in den weichen Untergrund abzuleiten.

Des Weiteren wird vorgeschlagen, dass die zentrale Versteifungseinheit als eine doppelte Versteifungseinheit ausgebildet ist, die je Aufständerungsreihe jeweils Fachwerkmodule aufweist, die jeweils zwischen dem mittleren Stützelement und einem äußeren Stützelement angeordnet sind. Unter einer "doppelten Versteifungseinheit" soll eine Versteifungseinheit verstanden werden, die größer und stabiler ausgebildet ist als die ersten Versteifungseinheiten, vorzugsweise doppelt so breit wie die ersten Versteifungseinheiten. Eine doppelte Versteifungseinheit ist im Wesentlichen aus zwei direkt nebeneinander angeordneten ersten Versteifungseinheiten ausgebildet. Die doppelte Versteifungseinheit ist vorzugsweise im Wesentlichen aus gleichen Bauteilen aufgebaut wie die ersten Versteifungseinheiten. Die doppelte Versteifungseinheit ist im Wesentlichen aus doppelt so vielen Bauteilen gebildet wie die erste Versteifungseinheit (einfache Versteifungseinheit). Dadurch kann die zentrale Versteifungseinheit besonders vorteilhaft zur Aufnahme einer Antriebseinheit ausgebildet werden.

Weiterhin wird vorgeschlagen, dass ein mittleres Querversteifungselement als ein doppeltes Querversteifungselement aus zwei übereinander angeordneten Trägern ausgebildet ist, die über Querstreben miteinander verbunden sind. Dadurch kann das mittlere Querversteifungselement besonders stabil ausgebildet werden.

Außerdem wird ein Solaranlagensystem mit einer Solaranlagenaufständervorrichtung mit einem Versteifungsmodul, das eine Vielzahl von Versteifungseinheiten aufweist, vorgeschlagen, wobei das Solaranlagensystem eine erste Haltevorrichtung und eine Vielzahl von an der ersten Haltevorrichtung angebundenen Solarmodulen, die an Stützelemente einer ersten Aufständerungsreihe angebunden sind, und eine zweite Haltevorrichtung und eine Vielzahl von an der zweiten Haltevorrichtung angebundenen Solarmodulen aufweist, die an Stützelemente einer zweiten Aufständerungsreihe angebunden sind.

Unter einem "Solaranlagensystem" soll vorzugsweise eine Vielzahl von Reihen an Solarmodulen verstanden werden, die jeweils über entsprechende Solaranlagenaufständervorrichtungen auf einem Untergrund, insbesondere einem weichen Untergrund, wie einem Moorboden aufgestellt sind. Das Solaranlagensystem besteht dabei aus zumindest zwei Reihen, vorzugsweise aber aus zumindest mehr als 20, besonders bevorzugt aus mehr als 50. Vorzugsweise kann ein Solaranlagensystem auch weit mehr als 100 Reihen aufweisen. Dadurch kann ein Solaranlagensystem besonders vorteilhaft zur Aufstellung in einem Gelände mit einem weichen Untergrund, insbesondere in einem Gelände, das einen Moorboden aufweist, aufgestellt werden.

Es wird weiter vorgeschlagen, dass die Solarmodule mittels der Haltevorrichtung jeweils zu einer Rotationsachse schwenkbar gelagert sind. Dadurch können die Solarmodule besonders vorteilhaft zur Verfolgung des Sonnenstandes ausgebildet werden und immer optimal zur Sonne ausgerichtet werden.

Zudem wird vorgeschlagen, dass das Solaranlagensystem zumindest eine Antriebseinheit zur Verschwenkung der Solarmodule aufweist, die in einem mittleren Bereich einer zentralen Versteifungseinheit des Versteifungsmoduls angebunden ist. Dadurch kann die Antriebseinheit besonders vorteilhaft angeordnet werden.

Weiterhin wird vorgeschlagen, dass die Haltevorrichtung über Lagerelemente an die Solarmodulanbindungselemente, die an den Versteifungseinheiten angebunden sind, an die Aufständerungsreihen angebunden sind. Dadurch können die Solarmodule über die Haltevorrichtung besonders einfach und vorteilhaft an die Solaranlagenaufständervorrichtung angebunden werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung von zwei Reihen eines Solaranlagensystems, mit Solarmodulen und mit einer Solaranlagenaufständervorrichtung, die ein Versteifungsmodul mit mehreren Versteifungseinheiten aufweist,
- Fig. 2: eine in Querrichtung betrachtete, schematische Seitenansicht auf das Solaranlagensystem mit der Solaranlagenaufständervorrichtung, die eine Vielzahl von Stützelementen aufweist,

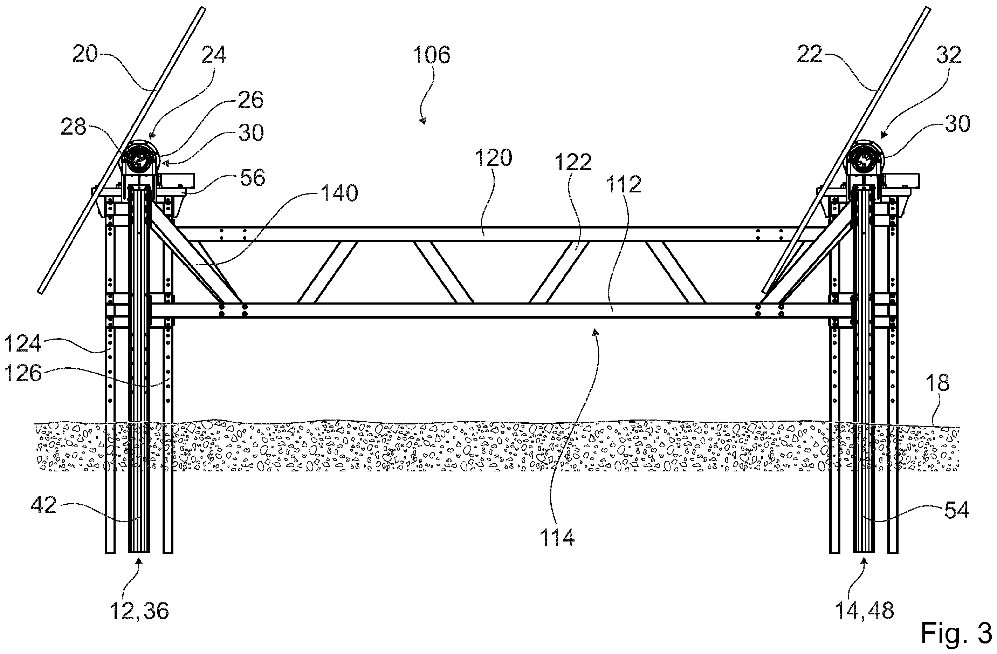

- Fig. 3: eine in Längsrichtung betrachtete schematische Seitenansicht, mit zwei Aufständerungsreihen an Stützelementen, die in einem Untergrund eingebracht sind, und einer zweiten Versteifungseinheit des Versteifungsmoduls,

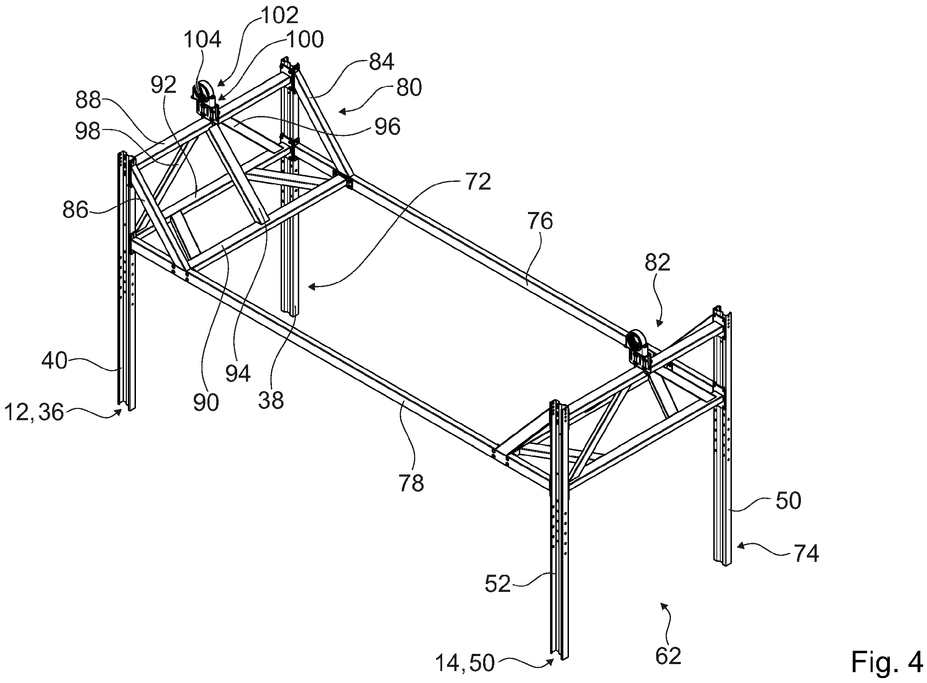

- Fig. 4: eine schematische Ansicht einer ersten Versteifungseinheit des Versteifungsmoduls, die jeweils zwei Stützelemente der beiden Aufständerungsreihen miteinander verbindet,

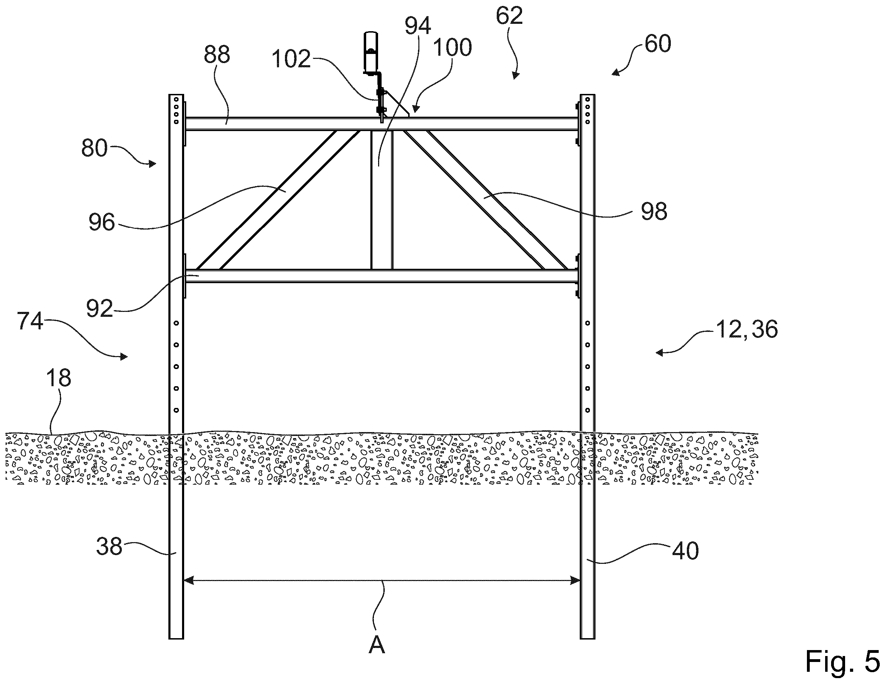

- Fig. 5: eine in Querrichtung betrachtete schematische Seitenansicht der ersten Versteifungseinheit des Versteifungsmoduls, zur Versteifung der Stützelemente,

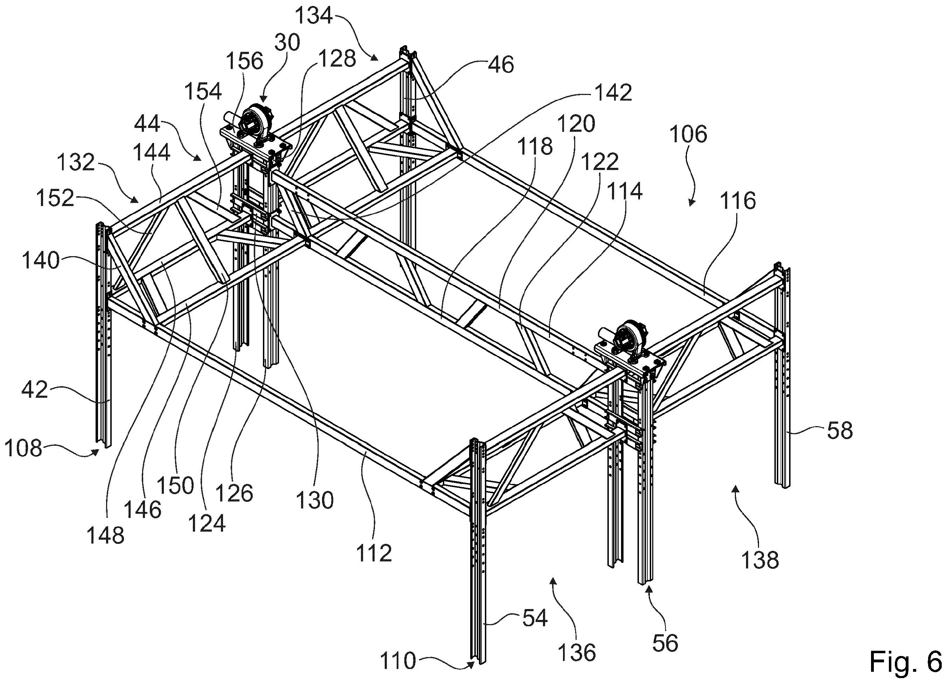

- Fig. 6: eine schematische Ansicht einer zweiten Versteifungseinheit des Versteifungsmoduls, die jeweils drei Stützelemente der beiden Aufständerungsreihen miteinander verbindet, wobei die mittleren Stützelemente als Doppelstützelemente ausgebildet sind,

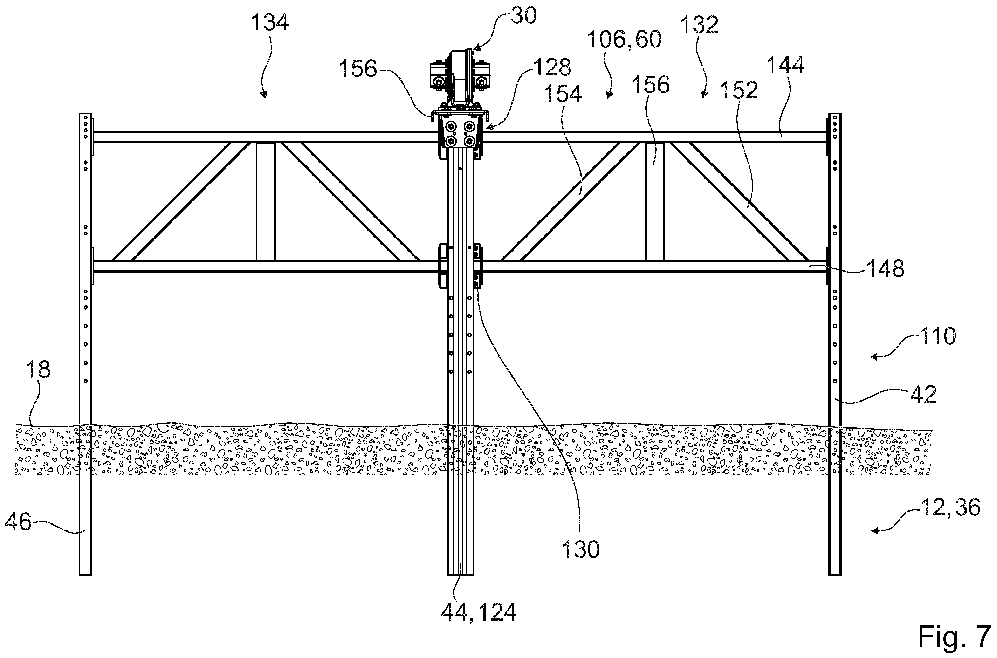

- Fig. 7: eine in Querrichtung betrachtete schematische Seitenansicht der zweiten Versteifungseinheit des Versteifungsmoduls und

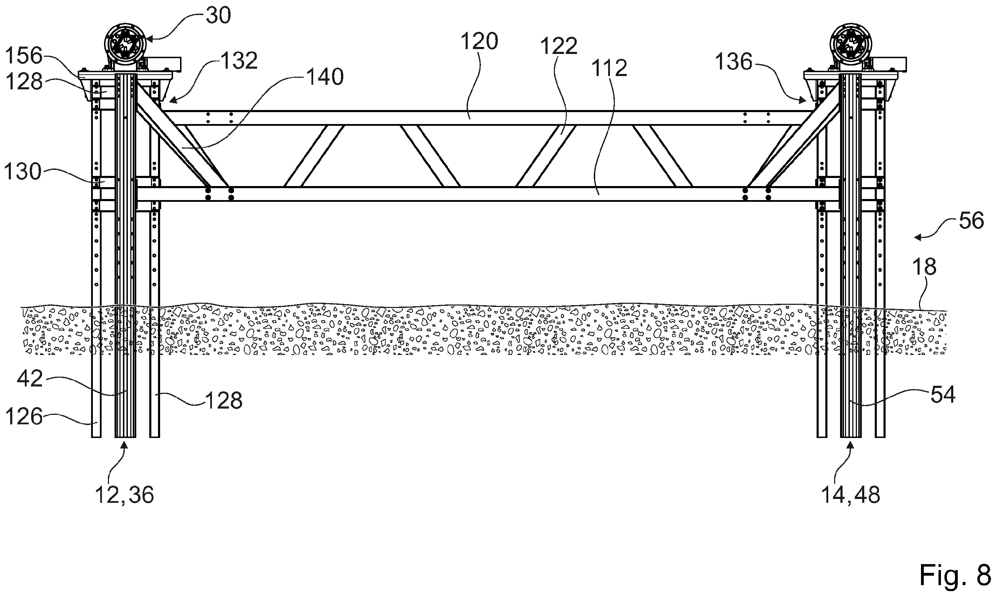

- Fig. 8: eine in Längsrichtung betrachtete schematische Seitenansicht der zweiten Versteifungseinheit des Versteifungsmoduls, zur Versteifung der Stützelemente.

### Beschreibung des Ausführungsbeispiels

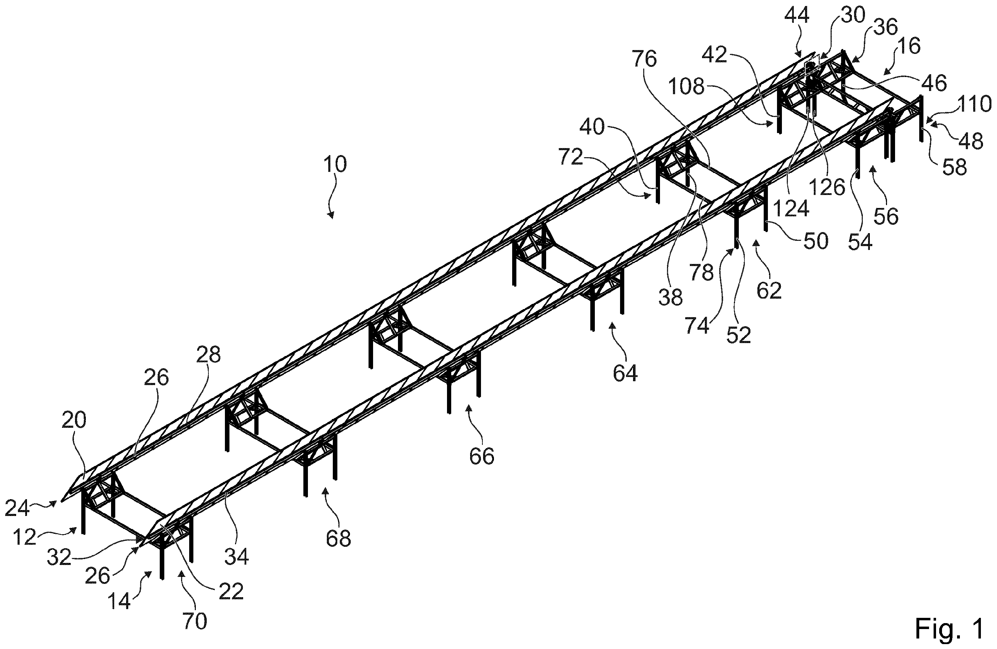

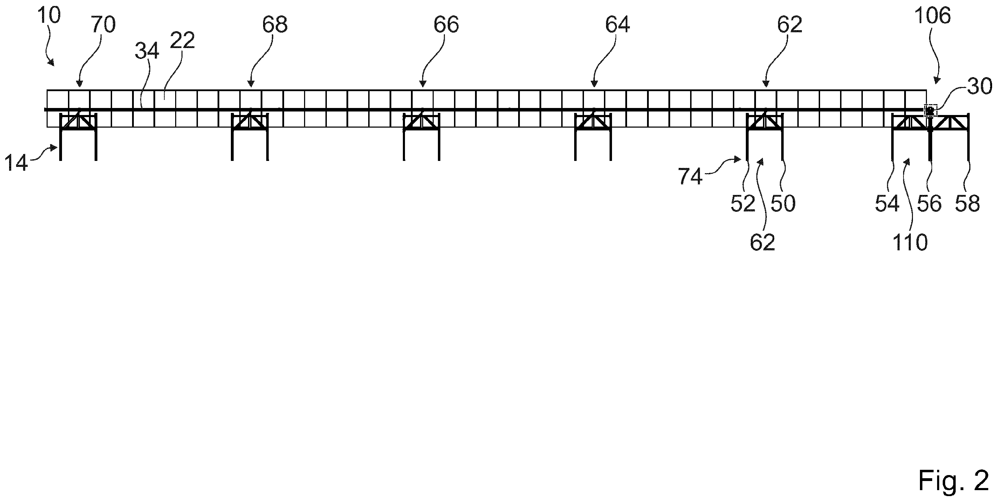

Die Figuren 1 und 2 zeigen einen Teil eines erfindungsgemäßen Solaranlagensystems 10. Die Figuren 1 und 2 zeigen beispielhaft einen Teil eines Solaranlagensystems 10. In den Figuren 1 und 2 sind dabei lediglich zwei Reihen 12, 14 des Solaranagensystems 10 gezeigt. Dabei sind die zwei Reihen 12, 14 des Solaranlagensystems 10 lediglich zur Hälfte dargestellt. Eine Länge des Solaranlagensystems 10 ist abhängig von einer zur Verfügung stehenden Fläche, auf der das Solaranlagensystem angebracht ist. Vorzugsweise weist das Solaranlagensystem eine Länge von zumindest 100m auf, besonders bevorzugst eine Länge von mehreren hundert Metern.

Das Solaranlagensystem 10 weist eine Solaranlagenaufständervorrichtung 16 auf. Die Solaranlagenaufständervorrichtung 16 bildet eine Aufständerplattform für zwei Reihen 12, 14 des Solaranlagensystems 10 aus. Die Solaranlagenvorrichtung 10 weist weitere Solaranlagenaufständervorrichtungen 16 auf. Die Solaranlagenaufständervorrichtung 16 ist zur Befestigung der zwei Reihen 12, 14 des Solaranlagensystems auf einem Untergrund 18 vorgesehen. Die weiteren Solaranlagenaufständervorrichtungen 16 bilden dabei jeweils eine Aufständerplattform für jeweils zwei weitere Reihen des Solaranlagensystems 10 aus. Das Solaranlagensystem 10 weist eine Vielzahl von Solarmodulen 20, 22 auf. Aus Gründen der Übersicht ist in den Zeichnungen jeweils nur ein Solarmodul 20, 22 einer Reihe 12, 14 des Solaranlagensystems 10 mit einem Bezugszeichen versehen.

Das Solaranlagensystem 10 weist eine erste Haltevorrichtung 24 auf. Die erste Haltevorrichtung 24 ist dazu vorgesehen, die Vielzahl von Solarmodulen 20 der ersten Reihe 12 des Solaranlagensystems 10 anzubinden. Die Vielzahl von Solarmodulen 20 der ersten Reihe 12 des Solaranlagensystems 10 ist an die erste Haltevorrichtung 24 angebunden. Die Solarmodule 20 der ersten Reihe 12 des Solaranlagensystems 10 sind an der ersten Haltevorrichtung 24 montiert. Die erste Haltevorrichtung 24 ist zur schwenkbaren Lagerung der Solarmodule 20 vorgesehen. Die Solarmodule 20 der ersten Reihe des Solaranlagensystems 10 sind mittels der Haltevorrichtung 24 gemeinsam schwenkbar. Die erste Haltevorrichtung 24 weist ein Achselement 26 auf. Das Achselement 26 weist eine Mittellängsachse auf. Die Mittellängsachse bildet eine Rotationsachse 28 des Achselements 26 aus. Die Solarmodule 20 der ersten Reihe 12 sind an das Achselement 26 montiert. Die mit der Haltevorrichtung 24 verbundenen Solarmodule 20 sind über die Rotationsachse 28 verschwenkbar. Das Achselement 26 ist als ein länglicher Träger ausgebildet. Das Achselement 26 ist als ein Holm ausgebildet. Das Achsenelement 26 ist im Inneren hohl ausgebildet. Das Achselement 26 weist beispielsweise einen im Wesentlichen hexagonalen Querschnitt auf. Dadurch kann vorteilhaft eine Übertragung einer Rotationsbewegung mittels des Achselements 26 vereinfacht werden. Grundsätzlich sind auch andere Querschnitte, wie beispielsweise ein rechteckiger, ein anderer vieleckiger oder runder Querschnitt denkbar. Das Achselement 26 erstreckt sich über die gesamte Länge der ersten Reihe 12 des Solaranlagensystems 10. Das Achselement 26 ist mehrteilig ausgebildet. Das Achselement 26 ist aus zumindest zwei Achshälften, wobei sich je eine der Achshälften jeweils von einer Mitte der Reihe 12 bis an ein Ende erstrecken. Grundsätzlich ist es auch denkbar, dass das Achselement 26 aus mehr als zwei Teilen besteht. Dabei ist es denkbar, dass die Achshälften des Achselements 26 jeweils aus mehreren Einzelteilstücken gebildet sind. Die Haltevorrichtung 20 weist Halteelemente auf, über die die einzelnen Solarmodule 20 der ersten Reihe 12 jeweils mit dem Achselement 26 drehfest verbunden sind.

Das Solaranlagensystem 10 weist eine Antriebseinheit 30 zur Verschwenkung der Solarmodule 20 der ersten Reihe 12 auf. Die Antriebseinheit 30 ist in einem mittleren Bereich der ersten Reihe 12 des Solaranagensystems 10 angeordnet. Grundsätzlich wäre es auch denkbar, dass die Antriebseinheit 30 in einem außermittigen Bereich der ersten Reihe 12, beispielsweise in einem seitlichen Endbereich der ersten Reihe 12 angeordnet ist. Die Antriebseinheit 30 ist vorzugsweise als ein Elektromotor ausgebildet. Grundsätzlich ist es auch denkbar, dass die Antriebseinheit 30 als ein anderer, dem Fachmann als sinnvoll erscheinender Motor ausgebildet ist. Die Antriebseinheit 30 ist als ein Stellmotor ausgebildet. Der Antriebseinheit 30 ist dazu vorgesehen, eine Drehbewegung an das Achselement 26 zu übertragen. Die Antriebseinheit 30 ist dazu vorgesehen, das Achselement 26 und dadurch die daran angebundenen Solarmodule 20 der ersten Reihe 12 zu verschwenken. Durch die Antriebseinheit 30 können die Solarmodule 20 verschwenkt und dadurch im Verlauf eines Tages dem Sonnenstand folgend ausgerichtet werden.

Das Solaranlagensystem 10 weist eine zweite Haltevorrichtung 32 auf. Die zweite Haltevorrichtung 32 ist dazu vorgesehen, die Vielzahl von Solarmodulen 22 der zweiten Reihe 14 des Solaranlagensystems 10 anzubinden. Die Vielzahl von Solarmodulen 22 der zweiten Reihe 14 des Solaranlagensystems 10 ist an die zweiten Haltevorrichtung 32 angebunden. Die zweite Haltevorrichtung 32 ist zur schwenkbaren Lagerung der Solarmodule 20 vorgesehen. Die zweite Haltevorrichtung 32 weist ein Achselement 34 auf. Die Solarmodule 22 der zweiten Reihe 14 sind an das Achselement 34 montiert. Das Solaranlagensystem 10 weist eine weitere, nicht näher dargestellte Antriebseinheit zur Verschwenkung der Solarmodule 22 der zweiten Reihe 14 auf, die an das Achselement 34 angebunden ist. Die zweite Haltevorrichtung 32 zur Anbindung der Solarmodule 22 der zweiten Reihe 14 ist im Wesentlichen gleich ausgebildet wie die erste Haltevorrichtung 24 zur Anbindung der Solarmodule 20 der ersten Reihe 12. Die zweite Haltevorrichtung 32 soll deshalb hier im näheren nicht beschrieben werden. Das Solaranlagensystem 10 weist eine weitere Antriebseinheit 30 zur Verschwenkung der Solarmodule 20 der ersten Reihe 12 auf.

Die Solaranlagenaufständervorrichtung 16 ist zur Aufstellung in einem weichen Untergrund 18 vorgesehen. Der weiche Untergrund 18 ist als ein Untergrund ausgebildet, der einen geringeren Widerstand gegen Einsinken gegenüber einem normalen terrestrischen Boden, beispielsweise aus einer Schwarzerde oder einer Braunerde aufweist. Der weiche Untergrund 18 ist beispielsweise als ein Moorboden oder ein Morast-Boden ausgebildet.

Das Solaranlagenaufständervorrichtung 16 weist eine erste Aufständerungsreihe 36 an Stützelementen 38, 40, 42, 44, 46 auf. Die erste Aufständerungsreihe 36 weist eine Vielzahl an Stützelementen 38, 40, 42, 44, 46 auf. Beispielhaft weist das teilweise dargestellte Solaranlagensystem 10 dreizehn Stützelemente 38, 40, 42, 44, 46 auf. Von den dreizehn dargestellten Stützelementen 38, 40, 42, 44, 46 der ersten Aufständerungsreihe 36 sind aus Übersichtlichkeitsgründen lediglich fünf der Stützelemente 38, 40, 42, 44, 46 mit einem Bezugszeichen versehen. Die erste Aufständerungsreihe 36 ist zur Aufständerung der Solarmodule 20 der ersten Reihe 12 auf dem Untergrund 18 vorgesehen. Über die Stützelemente 38, 40, 42, 44, 46 der ersten Aufständerungsreihe 36 sind die Solarmodule 20 der ersten Reihe 12 mit dem Untergrund 18 verbunden. Die Stützelemente 38, 40, 42, 44, 46 sind fest mit dem Untergrund 18 verbunden. Die Stützelemente 38, 40, 42, 44, 46 sind in den Untergrund 18 eingebracht. Die Stützelemente 38, 40, 42, 44, 46 sind als Rammprofile ausgebildet, die dazu vorgesehen sind, in den Untergrund 18 eingerammt zu werden. Die als Rammprofile ausgebildeten Stützelemente 38, 40, 42, 44, 46 sind in einem aufgestellten Zustand, vorzugsweise zumindest bis zu einer Tiefe von 1,5 bis 3 Metern in den Untergrund 18 eingerammt. Grundsätzlich wäre es auch denkbar, dass die Stützelemente 38, 40, 42, 44, 46 anders ausgebildet sind, beispielsweise als Schraubenanker ausgebildet sind, die in den Untergrund 18 eingeschraubt sind.

Das Solaranlagenaufständervorrichtung 16 weist eine zweite Aufständerungsreihe 48 an Stützelementen 50, 52, 54, 56, 58 auf. Die zweite Aufständerungsreihe 48 weist eine Vielzahl der Stützelemente 50, 52, 54, 56, 58 auf. Beispielhaft weist das teilweise dargestellte Solaranlagensystem 10 dreizehn Stützelemente 50, 52, 54, 56, 58 auf. Von den dreizehn dargestellten Stützelementen 50, 52, 54, 56, 58 der zweiten Aufständerungsreihe 48 sind aus Übersichtlichkeitsgründen lediglich fünf der Stützelemente 50, 52, 54, 56, 58 mit einem Bezugszeichen versehen. Die zweite Aufständerungsreihe 48 ist zur Aufständerung der Solarmodule 22 der zweiten Reihe 14 auf dem Untergrund 18 vorgesehen. Über die Stützelemente 50, 52, 54, 56, 58 der zweiten Aufständerungsreihe 48 sind die Solarmodule 22 der zweiten Reihe 14 mit dem Untergrund 18 verbunden. Die Stützelemente 50, 52, 54, 56, 58 sind fest mit dem Untergrund 18 verbunden. Die Stützelemente 50, 52, 54, 56, 58 sind in den Untergrund 18 eingebracht. Die Stützelemente 50, 52, 54, 56, 58 sind als Rammprofile ausgebildet, die dazu vorgesehen sind, in den Untergrund 18 eingerammt zu werden.

Die zweite Aufständerungsreihe 48 an Stützelementen 50, 52, 54, 56, 58 ist in einer Querrichtung beabstandet zu der ersten Aufständerungsreihe 36 an Stützelementen 38, 40, 42, 44, 46 angeordnet. Die zwei Aufständerungsreihen 34, 48 verlaufen parallel zueinander. Der Abstand in Querrichtung zwischen den beiden Aufständerungsreihen 36, 48 ist gleichbleibend. Die zwei Aufständerungsreihen 36, 48 weisen in der Querrichtung vorzugsweise einen Abstand auf, der größer ist als 5 Meter. Bevorzugt liegt der Abstand in Querrichtung zwischen den beiden Aufständerungsreihen 36, 48 in einem Bereich von 3 bis 8 Meter.

Die Solaranlagenaufständervorrichtung 16 weist ein Versteifungsmodul 60 auf. Über das Versteifungsmodul 60 sind die Stützelemente 38, 40, 42, 44, 46 der ersten Aufständerungsreihe 36 und die Stützelemente 50, 52, 54, 56, 58 der zweiten Aufständerungsreihe 48 direkt miteinander verbunden. Mittels des Versteifungsmoduls 60 sind jeweils zwei gegenüberliegende Stützelemente 38, 40, 42, 44, 46, 50, 52, 54, 56, 58 der beiden Aufständerungsreihen 36, 48 direkt miteinander verbunden. Das Versteifungsmodul 60 ist dazu vorgesehen, die beiden Aufständerungsreihen 36, 48 gegeneinander abzustützen. Das Versteifungsmodul 60 ist dazu vorgesehen, auf eine Aufständerungsreihe 36, 48 wirkende Seitenkräfte an der anderen Aufständerungsreihe 36, 48 abzustützen, um Rotationsmomente in den Stützelementen 38, 40, 42, 44, 46, 50, 52, 54, 56, 58 zu verringern, vorzugsweise zu verhindern.

Das Versteifungsmodul 60 weist eine erste Versteifungseinheit 62 auf. Das Versteifungsmodul 60 weist mehrere erste Versteifungseinheiten 62, 64, 66, 68, 70 auf. Das Versteifungsmodul 60 weist in Abhängigkeit einer Länge des Solaranlagensystems 10 eine entsprechende Anzahl an Versteifungseinheiten 62, 64, 66, 68, 70 auf. Die Versteifungseinheiten 62, 64, 66, 68, 70 sind in Längsrichtung des Solaranlagensystems 10 in definierten Abständen angeordnet. Die Versteifungseinheiten 62, 64, 66, 68, 70 sind vorzugsweise in im Wesentlichen gleichbleibenden Abständen zueinander angeordnet. Grundsätzlich ist es aber auch denkbar, dass einige Versteifungseinheiten 62, 64, 66, 68, 70 unterschiedliche Abstände zu dem jeweiligen benachbarten Versteifungselement 62, 64, 66, 68, 70 aufweisen, wenn beispielsweise eine Beschaffenheit des Untergrunds 18, oder Hindernisse in dem Bereich der Aufstellung dies nötig machen. Die Versteifungseinheiten 62, 64, 66, 68, 70 weisen zu einer benachbarten Versteifungseinheit 62, 64, 66, 68, 70 einen Abstand auf, der in einem Bereich von 6 bis 12 Metern liegt.

Die ersten Versteifungseinheiten 62, 64, 66, 68, 70 sind jeweils gleich ausgebildet. Die Versteifungseinheiten 62, 64, 66, 68, 70 verbinden jeweils ein Stützelementpaar 72, 74 der beiden Aufständerungsreihen 36, 48 miteinander. Mittels der Versteifungseinheiten 62, 64, 66, 68, 70 können Kräfte zwischen den Stützelementen 38, 40, 50, 52, der Stützelementpaare 72, 74 abgestützt werden. Die Stützelemente 38, 40, 50, 52 der Aufständerungsreihen 36, 48 sind jeweils paarweise als die Stützelementpaare 72, 74 angeordnet. Die als Stützelementpaar 72, 74 angeordneten Stützelemente 38, 40, 50, 52 weisen einen Abstand A voneinander auf. Der Abstand A zwischen den Stützelementen 38, 40, 50, 52 eines Stützelementpaars 72, 74 beträgt 2 Meter. Vorzugsweise kann der Abstand A zwischen den Stützelementen 38, 40, 50, 52 eines Stützelementpaars 72, 74 einen Wert zwischen 0,5 Meter und 3 Meter aufweisen, bevorzugt liegt er jedoch in einem Bereich von 1 Meter bis 2,5 Meter. Die Versteifungseinheiten 64, 66, 68, 70 sind im Wesentlichen gleich ausgebildet wie die erste Versteifungseinheit 62. Im Folgenden wird deshalb lediglich die eine erste Versteifungseinheit 62 näher beschrieben. Die Beschreibung der ersten Versteifungseinheit 62 kann auch zur Erläuterung der anderen ersten Versteifungseinheiten 64, 66, 68, 70 herangezogen werden.

Die Versteifungseinheit 62 weist zwei Querversteifungselemente 76, 78 auf. Die Querversteifungselemente 76, 78 sind jeweils zwischen zwei der Stützelemente 38, 40, 50, 52 der beiden Aufständerungsreihen 36, 48 angeordnet. Das erste Querversteifungselement 76 verbindet das Stützelement 38 der ersten Aufständerungsreihe 36 mit dem Stützelement 50 der zweiten Aufständerungsreihe 48. Die Querversteifungselemente 76, 78 sind als längliche Träger ausgebildet. Die Querversteifungselemente 76, 78 sind als Hohlprofile ausgebildet. Die Querversteifungselemente 76, 78 sind vorzugsweise aus einem Metall, insbesondere einem Aluminium ausgebildet. Die Querversteifungselemente 76, 78 weisen vorzugsweise einen rechteckigen Querschnitt auf. Grundsätzlich wäre auch denkbar, dass die Querversteifungselemente 76, 78 als andere Träger ausgebildet sind. Das erste Querversteifungselement 76 ist jeweils starr mit den beiden Stützelementen 38, 50 verbunden. Das zweite Querversteifungselement 78 verbindet das Stützelement 40 der ersten Aufständerungsreihe 36 mit dem Stützelement 52 der zweiten Aufständerungsreihe 48. Das zweite Querversteifungselement 78 ist jeweils starr mit den beiden Stützelementen 38, 50 verbunden. Die Querversteifungselemente 76, 78 sind vorzugsweise über eine Schraubenverbindung fest mit den jeweiligen Stützelementen 38, 40, 50, 52 verbunden. Dabei weisen die Querversteifungselemente 76, 68 an ihren Enden vorzugsweise jeweils einen Anbindungsflansch auf. Grundsätzlich wäre es auch denkbar, dass die Querversteifungselemente 76, 78 jeweils auf eine andere Weise stoff-, kraft- oder formschlüssig mit den jeweiligen Stützelementen 38, 40, 50, 52 verbunden sind. Beispielsweise ist es denkbar, dass die Querversteifungselemente 76, 78 mit den jeweiligen Stützelementen 38, 40, 50, 52 über eine Schweißverbindung stoffschlüssig verbunden sind. Die Querversteifungselemente 76, 78 sind dazu vorgesehen, die Aufständerungsreihen 36, 48 gegeneinander abzustützen. Die Querversteifungselemente 76, 78 stützen die jeweiligen Stützelemente 38, 40, 50, 52, die sie miteinander verbinden, gegeneinander ab. Die Querversteifungselemente 76, 78 sind dazu vorgesehen, Kräfte, insbesondere Zug- und Druckkräfte zwischen den jeweiligen Stützelementen 38, 40, 50, 52 zu übertragen.

Die Versteifungseinheit 62 weist je Aufständerungsreihe 36, 48 ein Fachwerkmodul 80, 82 auf. Das erste Fachwerkmodul 80 ist der ersten Aufständerungsreihe 36 zugeordnet. Das zweite Fachwerkmodul 82 ist der zweiten Aufständerungsreihe 48 zugeordnet. Die Fachwerkmodule 80, 82 verbinden die Stützelemente 38, 40, 50, 52 des entsprechenden Stützelementpaars 72, 74 miteinander und mit den Querversteifungselementen 76, 78. Die Fachwerkmodule 80, 82 sind dazu vorgesehen, Kräfte in die Querversteifungselemente 76, 78 einzuleiten. Die Fachwerkmodule 80, 82 sind dazu vorgesehen, auf die Stützelemente 38, 40, 50, 52 in einem oberen Bereich wirkenden Seitenkräfte so in die Querversteifungselemente 76, 78 einzuleiten, dass in einem Bereich unterhalb der Querversteifungselemente 76, 78 in den Stützelementen 38, 40, 50, 52 Rotationsmomente verringert, vorzugsweise verhindert werden.

Die beiden Fachwerkmodule 80, 82 sind im Wesentlichen gleich ausgebildet. Die Fachwerkmodule 80, 82 sind zueinander spiegelsymmetrisch ausgebildet. Im Folgenden soll nur das erste Fachwerkmodul 80 näher beschrieben werden, wobei die Beschreibung zur Erläuterung des zweiten Fachwerkmoduls 82 herangezogen werden kann. Das Fachwerkmodul 80 weist zwei Querverstrebungselemente 84, 86 auf. Die Querverstrebungselemente 84, 86 sind zwischen einem Ende des entsprechenden Stützelements 38, 40 angeordnet. Die Querverstrebungselemente 84, 86 verlaufen schräg zwischen dem vertikal ausgerichteten Stützelement 38, 40 und dem horizontal ausgerichteten Querversteifungselement 76, 78. Die Querverstrebungselemente 84, 86 schließen mit dem jeweiligen Querversteifungselement 76, 78 vorzugsweise einen Winkel von 50 Grad ein. Grundsätzlich ist es auch denkbar, dass die Querverstrebungselemente 84, 86 mit dem jeweiligen Querversteifungselement 76, 78 einen Winkel einschließen, der zwischen 55 Grad und 40 Grad liegt. Besonders bevorzugt liegt der Winkel zwischen den Querverstrebungselementen 84, 86 und dem jeweiligen Querversteifungselement 76, 78 vorzugsweise bei 45 Grad. Die Querverstrebungselemente 84, 86 sind als längliche Träger ausgebildet. Die Querverstrebungselemente 84, 86 sind als Hohlprofile ausgebildet. Die Querverstrebungselemente 84, 86 sind vorzugsweise aus einem Metall, insbesondere einem Aluminium ausgebildet. Die Querverstrebungselemente 84, 86 weisen vorzugsweise einen rechteckigen Querschnitt auf. Mit einem oberen Ende sind die Querverstrebungselemente 84, 86 jeweils fest mit dem Stützelement 38, 40 verbunden. Die Querverstrebungselemente 84, 86 sind über eine Schraubenverbindung fest mit dem jeweiligen Stützelement 38, 40 verbunden. Die Querverstrebungselemente 84, 86 weisen zur Verbindung mit den Stützelementen 38, 40 an ihrem oberen Ende vorzugsweise jeweils einen Anbindungsflansch auf. Mit einem unteren Ende sind die Querverstrebungselemente 84, 86 jeweils fest mit dem entsprechenden Querversteifungselement 76, 78 verbunden. Die Querverstrebungselemente 84, 86 sind über eine Schraubenverbindung fest mit den jeweiligen Querversteifungselementen 76, 78 verbunden. Die Querverstrebungselemente 84, 86 weisen zur Verbindung mit den Querversteifungselementen 76, 78 an ihrem unteren Ende vorzugsweise jeweils einen Anbindungsflansch auf. Grundsätzlich wäre es auch denkbar, dass die Querverstrebungselemente 84, 86 auf eine andere stoff-, form-, oder kraftschlüssige Weise mit dem jeweiligen Querversteifungselement 76, 78 verbunden sind.

Das Fachwerkmodul weist ein erstes Längsverstrebungselement 88 auf. Das erste Längsverstrebungselement 88 ist funktional zwischen den beiden Stützelementen 38, 40 fest angeordnet. Das erste Längsverstrebungselement 88 verbindet die Stützelemente 38, 40 an einem oberen Ende. Das erste Längsverstrebungselement 88 ist auf einer Höhe angeordnet, in der die Querverstrebungselemente 76, 78 an die Stützelemente 38, 40 angebunden sind. Das erste Längsverstrebungselement 88 ist jeweils mittels Schraubenverbindung mit den Stützelementen 38, 40 verbunden. Das Fachwerkmodul 80 weist ein zweites Längsverstrebungselement 90 auf. Das zweite Längsverstrebungselement 90 ist in Querrichtung zu den Stützelementen 38, 40 beabstandet zwischen den beiden Querversteifungselementen 76, 78 funktional angeordnet. Über das zweite Längsverstrebungselement 90 sind die beiden Querversteifungselemente 76, 78 direkt miteinander verbunden. Das zweite Längsverstrebungselement 90 ist vorzugsweise in einem rechten Winkel zu den Querversteifungselementen 76, 78 angeordnet. Das zweite Längsverstrebungselement 90 ist in einem Bereich zwischen den Querversteifungselementen 76, 78 angeordnet, in denen die Querverstrebungselemente 84, 86 an die Querversteifungselemente 76, 78 angebunden sind. Das zweite Längsverstrebungselement 90 ist an einer gleichen Querposition an den Querversteifungselementen 76, 78 angebunden wie die Querverstrebungselemente 84, 86.

Das Fachwerkmodul 80 weist ein drittes Längsverstrebungselement 92 auf. Das dritte Längsverstrebungselement 92 ist funktional zwischen den beiden Stützelementen 38, 40 fest angeordnet. Das dritte Längsverstrebungselement 92 ist unterhalb des ersten Längsverstrebungselements 88 angeordnet. Das dritte Längsverstrebungselement 92 verbindet die Stützelemente 38, 40 auf einer Höhe der Querversteifungselemente 76, 78 miteinander. Das dritte Längsverstrebungselement 92 ist jeweils mittels einer Schraubenverbindung mit den Stützelementen 38, 40 verbunden. Grundsätzlich wäre auch denkbar, dass das dritte Längsverstrebungselement 92 auf eine andere stoff-, form-, oder kraftschlüssige Weise mit dem jeweiligen Querversteifungselement 76, 78 verbunden ist. Über das erste und das dritte Längsverstrebungselement 88, 92 sind die beiden Stützelemente 38, 40, die das Stützelementpaar 72 bilden, direkt miteinander verbunden. Über die beiden ersten Längsverstrebungselemente 88, 90 sind die beiden Stützelemente 38, 40, die das Stützelementpaar 72 bilden, gegeneinander abgestützt. Die drei Längsverstrebungselemente 88, 90, 92 sind als längliche Träger ausgebildet. Die Längsverstrebungselemente 88, 90, 92 sind als Hohlprofile ausgebildet. Die Längsverstrebungselemente 88, 90, 92 sind vorzugsweise aus einem Metall, insbesondere einem Aluminium ausgebildet.

Das Fachwerkmodul weist ein drittes Querverstrebungselement 94 auf. Das dritte Querverstrebungselement 94 ist im Wesentlichen mittig zwischen den beiden Stützelementen 38, 40 funktional zwischen dem ersten Längsverstrebungselement 88 und dem zweiten Längsverstrebungselement 90 angeordnet ist. Das dritte Querverstrebungselement 94 ist im Wesentlichen mittig zwischen dem ersten Querverstrebungselement 84 und dem zweiten Querverstrebungselement 86 angeordnet. Das dritte Querverstrebungselement 94 verbindet das erste Längsverstrebungselement 88 mit dem zweiten Längsverstrebungselement 90. Das dritte Querverstrebungselement 94 ist wie die ersten Querverstrebungselemente 84, 86 als ein länglicher Träger, insbesondere ein Metallträger ausgebildet.

Das Fachwerkmodul 80 weist ein erstes Vertikalverstrebungselement 96 auf, das funktional zwischen dem ersten Längsverstrebungselement 88 und dem dritten Längsverstrebungselement 92 angeordnet ist. Das erste Vertikalverstrebungselement 96 ist mit einem unteren Ende an einem, dem Stützelement 38 zugewandten Endbereich des dritten Längsverstrebungselements 92 fest angebunden. Das erste Vertikalverstrebungselement 96 ist vorzugsweise an einer Oberseite des Längsverstrebungselements 92 mittels einer Schraubenverbindung fest angebunden. Das erste Vertikalverstrebungselement 96 ist mit einem oberen Ende fest in einem Mittelbereich an dem ersten Längsverstrebungselement 88 fest angebunden. Das erste Vertikalverstrebungselement 96 ist mit einem oberen Ende vorzugsweise an einer Unterseite des ersten Längsverstrebungselements 88 mittels einer Schraubenverbindung fest angebunden.

Das Fachwerkmodul 80 weist ein zweites Vertikalverstrebungselement 98 auf, das funktional zwischen dem ersten Längsverstrebungselement 88 und dem dritten Längsverstrebungselement 92 angeordnet ist. Das zweite Vertikalverstrebungselement 98 ist mit einem unteren Ende an einem, dem Stützelement 40 zugewandten Endbereich des dritten Längsverstrebungselements 92 fest angebunden. Das zweite Vertikalverstrebungselement 98 erstreckt sich bis über das erste Längsverstrebungselement 88. Das erste Längsverstrebungselement 88 weist ein vertikales Durchgangsloch 100 auf. Durch das vertikale Durchgangsloch 100 erstreckt sich das Vertikalverstrebungselement 98 in montiertem Zustand. An einem oberen Ende, welches oberhalb des ersten Längsverstrebungselements 88 angeordnet ist, weist das zweite Vertikalverstrebungselement 98 einen Anbindungsflansch 102 auf. Der Anbindungsflansch 102 ist zur Kopplung mit einem weiteren Element zur Anbindung der Haltevorrichtung 24 vorgesehen. Die zwei Vertikalverstrebungselemente 96, 98 sind mit ihren unteren Enden jeweils an gegenüberliegenden, dem jeweiligen Stützelement 38, 40 zugewandten Enden des dritten Längsverstrebungselements 92 angebunden.

Die Solaranlagenaufständervorrichtung 16 weist mehrere Solarmodulanbindungselemente 104 auf. Die Solarmodulanbindungselemente 104 sind jeweils an das erste Längsverstrebungselement 88 angebunden. Die Solarmodulanbindungselemente 104 sind jeweils vorzugsweise in einem Mittelbereich eines ersten Längsverstrebungselements 88 eines Fachwerkmoduls 80, 82 fest angebunden ist. Über die Solarmodulanbindungselemente 104 ist das Achselement 34 angebunden. Das Achselement 34 ist in den Solarmodulanbindungselementen 104 drehbar gelagert. Vorzugsweise sind die Solaranbindungselemente 104 jeweils mit dem Anbindungsflansch 102 des einen Vertikalverstrebungselements 98 des Fachwerkmoduls 80, 82 fest verschraubt. Dadurch können Lagerkräfte aus den Solaranbindungselementen 104 direkt über das Vertikalverstrebungselement 98 des Fachwerkmoduls 80, 82 abgeleitet werden.

Das Versteifungsmodul 60 weist eine zentrale Versteifungseinheit 106 auf. Die zentrale Versteifungseinheit 106 weist jeweils eine Stützelementgruppe 108, 110 von drei Stützelementen 42, 44, 46, 54, 56, 58 der beiden Aufständerungsreihen 36, 48 auf. Die zentrale Versteifungseinheit 106 verbindet die drei Stützelemente 42, 44, 46, 54, 56, 58 der Stützelementgruppe 108, 110 der beiden Aufständerungsreihen 36, 48 jeweils direkt miteinander. Mittels der zentralen Versteifungseinheit 106 können Kräfte zwischen den jeweils drei Stützelementen 42, 44, 46, 54, 56, 58 der Stützelementgruppe 108, 110 abgestützt werden. Die zwei äußeren Stützelemente 42, 46, 54, 58 weisen jeweils einen gleichen Abstand zu dem jeweiligen mittleren Stützelement 44, 56 auf. Die Stützelemente 42, 44, 46, 54, 56, 58 der Stützelementgruppe 108, 110 weisen jeweils einen Abstand A zu dem jeweiligen benachbarten Stützelement 42, 44, 46, 54, 56, 58 der Stützelementgruppe 108, 110 auf. Der Abstand A zwischen benachbarten Stützelementen 42, 44, 46, 54, 56, 58 der Stützelementgruppe 108, 110 ist vorzugsweise gleich wie der Abstand A zwischen den Stützelementen 38, 40, 50, 52 der Stützelementpaare 72, 74 der ersten Versteifungseinheiten 62, 64, 66, 68, 70. Die zentrale Versteifungseinheit 106 ist in Längsrichtung der Solaranlagenaufständervorrichtung 16 vorzugsweise mittig angeordnet. Die zentrale Versteifungseinheit 106 bildet in Längsrichtung gesehen vorzugsweise eine Mitte der Reihen 12, 14 des Solaranlagensystems 10 aus. Vorzugsweise weist das Versteifungsmodul 60 lediglich eine zentrale Versteifungseinheit 106 auf. Grundsätzlich wäre es auch denkbar, dass das Versteifungsmodul 60 mehrere zentrale Versteifungseinheiten 106 aufweist, insbesondere dann, wenn das Solaranlagensystem 10 und damit die Solaranlagenaufständervorrichtung 16 eine gewisse Länge (in Längsrichtung) überschreitet, sodass beispielsweise mehrere Antriebseinheiten 30 vorgesehen werden müssen.

Die zentrale Versteifungseinheit 106 weist drei Querversteifungselemente 112, 114, 116 auf. Die Querversteifungselemente 112, 114, 116 sind jeweils zwischen zwei der Stützelemente 42, 44, 46, 54, 56, 58 der Stützelementgruppe 108, 110 der beiden Aufständerungsreihen 36, 48 angeordnet. Das äußere Querversteifungselement 112 verbindet das Stützelement 42 der ersten Aufständerungsreihe 36 mit dem Stützelement 54 der zweiten Aufständerungsreihe 48. Das mittlere Querversteifungselement 114 verbindet das Stützelement 44 der ersten Aufständerungsreihe 36 mit dem Stützelement 56 der zweiten Aufständerungsreihe 48. Das äußere Querversteifungselement 116 verbindet das Stützelement 46 der ersten Aufständerungsreihe 36 mit dem Stützelement 58 der zweiten Aufständerungsreihe 48. Die äußeren Querversteifungselemente 112, 116 sind als längliche Träger ausgebildet. Die äußeren Querversteifungselemente 112, 116 sind als Hohlprofile ausgebildet. Die äußeren Querversteifungselemente 112, 116 sind im Wesentlichen gleich ausgebildet wie die Querversteifungselemente 76, 78 der ersten Versteifungseinheiten 62.

Das mittlere Querversteifungselement 114 ist als ein doppeltes Querversteifungselement ausgebildet. Das als doppeltes Querversteifungselement ausgebildete Querversteifungselement 114 ist von zwei übereinander angeordneten Trägern 118, 120 ausgebildet. Die übereinander angeordneten Träger 118, 120 sind über mehrere in Querrichtung schräg verlaufende Querstreben 122 miteinander verbunden.

Die mittleren Stützelemente 44, 56 der Stützelementgruppen 108, 110 sind jeweils als ein Doppelstützelement ausgebildet. Die mittleren Stützelemente 44, 46 weisen jeweils zwei Einzelstützelemente 124, 126 auf. Die Einzelstützelemente 124, 126 sind als Rammprofile ausgebildet, die in den weichen Untergrund 18 eingebracht sind. Die Einzelstützelemente 124, 126 sind vorzugsweise gleich ausgebildet wie die äußeren Stützelemente 42, 46, 54, 58 der Stützelementgruppe 108, 110, bzw. wie die Stützelemente 38, 40, 50, 52 der Stützelementpaare 72, 74. Die beiden Einzelstützelemente 124, 126 sind in Querrichtung beabstandet zueinander angeordnet. Die Einzelstützelemente 124, 126 weisen einen Abstand von 400 mm zueinander auf. Vorzugsweise liegt der Abstand zwischen den Einzelstützelementen zwischen 200 mm und 600 mm. Die mittleren Stützelemente 44, 56, weisen jeweils mehrere Verbindungselemente 128, 130 auf, mit denen die beiden Einzelstützelemente 124, 126 miteinander verbunden sind. Die Einzelstützelemente 124, 126 sind in unterschiedlichen Höhen, insbesondere in Höhe des unteren Trägers 118 des mittleren Querversteifungselements 114 und in der Höhe des oberen Trägers 120 des mittleren Querversteifungselements 114 mit den Verbindungselementen 128, 130 miteinander verbunden.

Die als doppelte Versteifungseinheit ausgebildete zentrale Versteifungseinheit 106 weist je Aufständerungsreihe 36, 48 jeweils zwei Fachwerkmodule 132, 134, 136, 138 auf. Die zwei Fachwerkmodule 132, 134, 136, 138 sind jeweils zwischen dem mittleren Stützelement 44, 56 und einem äußeren Stützelement 42, 46, 54, 58 angeordnet. Die Fachwerkmodule 132, 134, 136, 138 sind fast identisch zu den Fachwerkmodulen 80, 82 der ersten Versteifungseinheit 62 ausgebildet. In einem Bereich des mittleren Querversteifungselements 114, bzw. der mittleren Stützelemente 44, 56 sind die Fachwerkmodule 132, 134 unterschiedlich ausgebildet. Die Fachwerkmodule 132, 134, 136, 138 sind im Wesentlichen gleich ausgebildet. Die Fachmerkmodule 123, 134 der ersten Aufständerungsreihe 36 sind spiegelsymmetrisch zu den Fachwerkmodulen 136, 138 der zweiten Aufständerungsreihe 48 ausgebildet. Es wird im Folgenden lediglich das eine Fachwerkmodul 132 näher beschrieben. Zur Erläuterung der weiteren Fachwerkmodule 134, 136, 138 kann die Beschreibung des Fachwerkmoduls 132 herangezogen werden.

Das Fachwerkmodul 132 weist zwei Querverstrebungselemente 140, 142 auf. Die Querverstrebungselemente 140, 142 sind zwischen einem Ende des entsprechenden Stützelements 42, 44 angeordnet. Die Querverstrebungselemente 140, 142 verlaufen schräg zwischen dem vertikal ausgerichteten Stützelement 42, 44 und dem horizontal ausgerichteten Querversteifungselement 112, 114. Das mittlere Querversteifungselement 114 ist zwischen dem inneren Einzelstützelement 126 des Stützelements 44 und dem unteren Träger 118 des mittleren Querversteifungselements 114 angeordnet. Das mittlere Querversteifungselement 142 ist Teil der beiden nebeneinander angeordneten Fachwerkmodule 132, 134. Das mittlere Querverstrebungselement 114 des Fachwerkmoduls 132 bildet auch das mittlere Querverstrebungselement des zweiten Fachwerkmoduls 134 aus. Die Querverstrebungselemente 140, 142 sind wie die Querverstrebungselemente 84, 86 als längliche Träger ausgebildet. Die Querverstrebungselemente 140, 142 sind vorzugsweise jeweils mittels Schraubenverbindungen angebunden. Grundsätzlich wäre es auch denkbar, dass die Querverstrebungselemente 140, 142 auf eine andere stoff-, form-, oder kraftschlüssige weise mit dem jeweiligen Querversteifungselement 112, 114, bzw. Stützelement 42, 44 verbunden sind.

Das Fachwerkmodul 132 weist ein erstes Längsverstrebungselement 144 auf. Das erste Längsverstrebungselement 146 ist funktional zwischen den beiden Stützelementen 42, 44 fest angeordnet ist. Das erste Längsverstrebungselement 144 verbindet die Stützelemente 42, 44 an einem oberen Ende. Das Fachwerkmodul 132 weist ein zweites Längsverstrebungselement 146 auf. Das zweite Längsverstrebungselement 146 ist in Querrichtung zu den Stützelementen 42, 44 beabstandet zwischen den beiden Querversteifungselementen 112, 114 funktional angeordnet. Das Fachwerkmodul 132 weist ebenfalls ein drittes Längsverstrebungselement 148 auf. Das dritte Längsverstrebungselement 148 ist funktional zwischen den beiden Stützelementen 42, 44 fest angeordnet. Das dritte Längsverstrebungselement 148 ist unterhalb des ersten Längsverstrebungselements 144 angeordnet. Zur Anbindung an das als Doppelstützelement ausgebildetes Stützelement 44 sind die Längsverstrebungselemente 144, 148 an die Verbindungselemente 128, 130, die zwischen den Einzelstützelementen 124, 126 angeordnet sind, fest angebunden. Das Fachwerkmodul 132 weist ebenfalls ein drittes Querverstrebungselement 150 auf. Das dritte Querverstrebungselement 150 ist im Wesentlichen mittig zwischen den beiden Stützelementen 42, 44 funktional zwischen dem ersten Längsverstrebungselement 144 und dem zweiten Längsverstrebungselement 146 angeordnet. Das Fachwerkmodul 132 weist ebenfalls zwei Vertikalverstrebungselemente 152, 154 auf, die funktional zwischen dem ersten Längsverstrebungselement 144 und dem dritten Längsverstrebungselement 148 angeordnet sind. Die zwei Vertikalverstrebungselemente 152, 154 sind mit ihren unteren Enden jeweils an gegenüberliegenden, dem jeweiligen Stützelement 42, 44 zugewandten Enden des dritten Längsverstrebungselements 148, und mit ihren oberen Enden in einem Mittelbereich an dem ersten Längsverstrebungselement 144, fest angebunden.

Die zentrale Versteifungseinheit 106 weist eine mittlere Anbindungsplattform 156 auf. Die Anbindungsplattform 156 ist an einem oberen Ende des mittleren Stützelements 44 angeordnet. Die mittlere Anbindungsplattform 156 ist zur Lagerung des Achselements 26 der Haltevorrichtung 24 vorgesehen. Ferner ist die mittlere Anbindungsplattform 156 zur Anbindung der Antriebseinheit 30 vorgesehen. Die Anbindungsplattform 156 ist auf einer Oberseite des als Doppelstützelement ausgebildeten Stützelements 44 angebunden. Die Anbindungsplattform 156 ist auf einer Oberseite der Einzelstützelemente 124, 126 des Stützelements 44 fest angebunden, vorzugsweise verschraubt. Die Antriebseinheit 30 ist an der Anbindungsplattform 156 angebunden. Die Anbindungsplattform 156 bildet eine Montageplatte aus, auf der die Antriebseinheit 30 anbindbar ist.

### Bezugszeichen

- 10: Solaranlagensystem
- 12: Reihe
- 14: Reihe
- 16: Solaranlagenaufständervorrichtun 9
- 18: Untergrund
- 20: Solarmodul
- 22: Solarmodul
- 24: Haltevorrichtung
- 26: Achselement
- 28: Rotationsachse
- 30: Antriebseinheit
- 32: Haltevorrichtung
- 34: Achselement
- 36: Aufständerungsreihe
- 38: Stützelement
- 40: Stützelement
- 42: Stützelement
- 44: Stützelement
- 46: Stützelement
- 48: Aufständerungsreihe
- 50: Stützelement
- 52: Stützelement
- 54: Stützelement
- 56: Stützelement
- 58: Stützelement
- 60: Versteifungsmodul
- 62: Versteifungseinheit
- 64: Versteifungseinheit
- 66: Versteifungseinheit
- 68: Versteifungseinheit
- 70: Versteifungseinheit
- 72: Stützelementpaar
- 74: Stützelementpaar
- 76: Querversteifungselement
- 78: Querversteifungselement
- 80: Fachwerkmodul
- 82: Fachwerkmodul
- 84: Querverstrebungselement
- 86: Querverstrebungselement
- 88: Längsverstrebungselement
- 90: Längsverstrebungselement
- 92: Längsverstrebungselement
- 94: Querverstrebungselement
- 96: Vertikalverstrebungselement
- 98: Vertikalverstrebungselement
- 100: Durchgangsloch
- 102: Anbindungsflansch
- 104: Solarmodulanbindungselement
- 106: zentrale Versteifungseinheit
- 108: Stützelementgruppe
- 110: Stützelementgruppe
- 112: Querversteifungselement
- 114: Querversteifungselement
- 116: Querversteifungselement
- 118: Träger
- 120: Träger
- 122: Querstrebe
- 124: Einzelstützelement
- 126: Einzelstützelement
- 128: Verbindungselement
- 130: Verbindungselement
- 132: Fachwerkmodul
- 134: Fachwerkmodul
- 136: Fachwerkmodul
- 138: Fachwerkmodul
- 140: Querverstrebungselement
- 142: Querverstrebungselement
- 144: Längsverstrebungselement
- 146: Längsverstrebungselement
- 148: Längsverstrebungselement
- 150: Querverstrebungselement
- 152: Vertikalverstrebungselement
- 154: Vertikalverstrebungselement
- 156: Anbindungsplattform

## Patentansprüche

1. Solaranlagenaufständervorrichtung, insbesondere zur Aufstellung auf einem weichen Untergrund (18), mit einer ersten Aufständerungsreihe (36) an Stützelementen (38, 40, 42, 44, 46), die an dem Untergrund (18) befestigt sind, und mit einer zweiten Aufständerungsreihe (48) an Stützelementen (50, 52, 54, 56, 58), die an dem Untergrund (18) befestigt sind und die in einer Querrichtung beabstandet zu der ersten Aufständerungsreihe (36) an Stützelementen (38, 40, 42, 44, 46) angeordnet sind, mit einem Versteifungsmodul (60), über das die Stützelemente (38, 40, 42, 44, 46) der ersten Aufständerungsreihe (36) und die Stützelemente (50, 52, 54, 56, 58) der zweiten Aufständerungsreihe (48) direkt miteinander verbunden sind, und das dazu vorgesehen ist, auf eine Aufständerungsreihe (36, 48) wirkende Seitenkräfte an der anderen Aufständerungsreihe (36, 48) abzustützen, um Rotationsmomente in den Stützelementen (38, 40, 42, 44, 46, 50, 52, 54, 56, 58) zu verringern, vorzugsweise zu verhindern, wobei das Versteifungsmodul (60) eine erste Versteifungseinheit (62, 64, 66, 68, 70) aufweist, die jeweils ein Stützelementpaar (72, 74) der beiden Aufständerungsreihen (36, 48) miteinander verbindet und dazu zwei Querversteifungselemente (76, 78) aufweist, die jeweils zwischen zwei der Stützelemente (38, 40, 50, 52) der beiden Aufständerungsreihen (26, 48) angeordnet sind, **dadurch gekennzeichnet, dass** die Versteifungseinheit (62, 64, 66, 68, 70) je Aufständerungsreihe (36, 48) ein Fachwerkmodul (80, 82) aufweist, das die Stützelemente (38, 40, 50, 52) des entsprechenden Stützelementpaars (72, 74) miteinander und mit den Querversteifungselementen (76, 78) verbindet.

2. Solaranlagenaufständervorrichtung nach Anspruch 1, **dadurch gekennzeichnet, dass** das Fachwerkmodul (80, 82) zumindest zwei Querverstrebungselemente (84, 86) aufweist, die jeweils zwischen einem oberen Ende eines entsprechenden Stützelements (38, 40, 50, 52) und dem Querversteifungselement (76, 78) fest angeordnet sind.

3. Solaranlagenaufständervorrichtung nach Anspruch 1, **dadurch gekennzeichnet, dass** das Fachwerkmodul (80, 82) zumindest ein erstes Längsverstrebungselement (88), das funktional zwischen den beiden Stützelementen (38, 40, 50, 52) fest angeordnet ist, und ein zweites Längsverstrebungselement (90) aufweist, das in Querrichtung zu den Stützelementen (38, 40, 50, 52) beabstandet zwischen den beiden Querversteifungselementen (76, 78) funktional angeordnet ist.

4. Solaranlagenaufständervorrichtung nach Anspruch 3, **dadurch gekennzeichnet, dass** das Fachwerkmodul (80, 82) ein drittes Querverstrebungselement (94) aufweist, das im Wesentlichen mittig zwischen den beiden Stützelementen (38, 40, 50, 52) funktional zwischen dem ersten Längsverstrebungselement (88) und dem zweiten Längsverstrebungselement (90) angeordnet ist.

5. Solaranlagenaufständervorrichtung nach Anspruch 3, **dadurch gekennzeichnet, dass** das Fachwerkmodul (80, 82) ein drittes Längsverstrebungselement (92) aufweist, das unterhalb des ersten Längsverstrebungselements (88) funktional zwischen den beiden Stützelementen (38, 40, 50, 52) fest angeordnet ist, und zumindest ein Vertikalverstrebungselement (96, 98) aufweist, das funktional zwischen dem ersten Längsverstrebungselement (88) und dem dritten Längsverstrebungselement (92) angeordnet ist.

6. Solaranlagenaufständervorrichtung nach Anspruch 5, **dadurch gekennzeichnet, dass** das Fachwerkmodul (80, 82) zwei Vertikalverstrebungselemente (96, 98) aufweist, die mit einem ersten Ende in einem Mittelbereich des ersten Längsversteifungselements (88) angebunden sind und mit ihrem zweiten Ende jeweils an gegenüberliegenden, dem jeweiligen Stützelement (38, 40) zugewandten Enden des dritten Längsverstrebungselements (92) angebunden sind.

7. Solaranlagenaufständervorrichtung nach einem der Ansprüche 3-6, **dadurch gekennzeichnet, dass** das erste Längsverstrebungselement (88) zumindest ein Solarmodulanbindungselement (104) aufweist, das vorzugsweise in einem Mittelbereich eines ersten Längsverstrebungselements (88) eines Fachwerkmoduls (80, 82) fest angebunden ist.

8. Solaranlagenaufständervorrichtung nach einem der vorhergehenden Ansprüche, **dadurch gekennzeichnet, dass** das Versteifungsmodul (60) weitere erste Versteifungseinheiten (62, 64, 66, 68, 70) aufweist, die jeweils vorzugsweise einen Abstand von 6 m bis 12 m von den jeweils benachbarten Versteifungseinheiten (62, 64, 66, 68, 70) aufweisen.

9. Solaranlagenaufständervorrichtung nach einem der vorhergehenden Ansprüche, **dadurch gekennzeichnet, dass** das Versteifungsmodul (60) eine zentrale Versteifungseinheit (106) aufweist, die jeweils eine Stützelementgruppe (108, 110) von drei Stützelementen (42, 44, 46, 54, 56, 58) der beiden Aufständerungsreihen (36, 48) miteinander verbindet und dazu drei Querversteifungselemente (112, 114, 116) aufweist, die jeweils zwischen zwei der Stützelemente (42, 44, 46, 54, 56, 58) der beiden Aufständerungsreihen (36, 48) angeordnet sind.

10. Solaranlagenaufständervorrichtung nach Anspruch 9, **dadurch gekennzeichnet, dass** die mittleren Stützelemente (44, 56) der Stützelementgruppen (108, 110) als ein Doppelstützelement ausgebildet sind.

11. Solaranlagenaufständervorrichtung nach Anspruch 9, **dadurch gekennzeichnet, dass** die zentrale Versteifungseinheit (106) als eine doppelte Versteifungseinheit ausgebildet ist, die je Aufständerungsreihe (36, 48) jeweils zwei Fachwerkmodule (132, 134, 136, 138) aufweist, die jeweils zwischen dem mittleren Stützelement (44, 56) und einem äußeren Stützelement 42, 46, 54, 58) angeordnet sind.

12. Solaranlagenaufständervorrichtung nach Anspruch 9, **dadurch gekennzeichnet, dass** ein mittleres Querversteifungselement (114) als ein doppeltes Querversteifungselement aus zwei übereinander angeordneten Trägern (118, 120) ausgebildet ist, die über Querstreben (122) miteinander verbunden sind.

13. Solaranlagensystem mit einer Solaranlagenaufständervorrichtung nach einem der vorhergehenden Ansprüche mit einem Versteifungsmodul (60), das eine Vielzahl von Versteifungseinheiten (62, 64, 66, 68, 70, 106) aufweist, **gekennzeichnet durch** eine erste Haltevorrichtung (24) und eine Vielzahl von an der ersten Haltevorrichtung (24) angebundenen Solarmodulen (20), die an Stützelemente (38, 40, 42, 44, 46) einer ersten Aufständerungsreihe (36) angebunden sind, und eine zweite Haltevorrichtung (32) und eine Vielzahl von an der zweiten Haltevorrichtung (32) angebundenen Solarmodulen (22), die an Stützelemente (50, 52, 54, 56, 58) einer zweiten Aufständerungsreihe (48) angebunden sind.

14. Solaranlagensystem nach Anspruch 13, **dadurch gekennzeichnet, dass** die Solarmodule (20, 22) mittels der Haltevorrichtung (24, 32) jeweils zu einer Rotationsachse schwenkbar gelagert sind.

15. Solaranlagensystem nach Anspruch 14, **gekennzeichnet durch** zumindest eine Antriebseinheit (30) zur Verschwenkung der Solarmodule (20, 22), die in einem mittleren Bereich einer zentralen Versteifungseinheit (106) des Versteifungsmoduls (60) angebunden ist.

## Claims

1. A solar installation mounting device, in particular for mounting on a soft ground (18), having a first mounting row (36) of support elements (38, 40, 42, 44, 46) which are fastened to the ground (18), and having a second mounting row (48) of support elements (50, 52, 54, 56, 58) which are fastened to the ground (18) and which are arranged spaced apart in a transverse direction from the first mounting row (36) of support elements (38, 40, 42, 44, 46), having a stiffening module (60) via which the support elements (38, 40, 42, 44, 46) of the first mounting row (36) and the support elements (50, 52, 54, 56, 58) of the second mounting row (48) are connected directly to one another, and which is configured to support lateral forces acting on a mounting row (36, 48) on the other mounting row (36, 48) in order to reduce, preferably prevent, rotational moments in the support elements (38, 40, 42, 44, 46, 50, 52, 54, 56, 58), wherein the stiffening module (60) has a first stiffening unit (62, 64, 66, 68, 70) which in each case connects a support element pair (72, 74) of the two mounting rows (36, 48) to one another and for this purpose has two transverse stiffening elements (76, 78) which are arranged in each case between two of the support elements (38, 40, 50, 52) of the two mounting rows (26, 48), **characterized in that** the stiffening unit (62, 64, 66, 68, 70) has, for each mounting row (36, 48), a truss module (80, 82) which connects the support elements (38, 40, 50, 52) of the corresponding support element pair (72, 74) to one another and to the transverse stiffening elements (76, 78).

2. The solar installation mounting device according to claim 1, **characterized in that** the truss module (80, 82) has at least two transverse bracing elements (84, 86) which are arranged fixedly in each case between an upper end of a corresponding support element (38, 40, 50, 52) and the transverse stiffening element (76, 78).

3. The solar installation mounting device according to claim 1, **characterized in that** the truss module (80, 82) has at least one first longitudinal bracing element (88) which is arranged fixedly functionally between the two support elements (38, 40, 50, 52), and a second longitudinal bracing element (90) which is arranged functionally spaced apart in the transverse direction from the support elements (38, 40, 50, 52) between the two transverse stiffening elements (76, 78).

4. The solar installation mounting device according to claim 3, **characterized in that** the truss module (80, 82) has a third transverse bracing element (94) which is arranged functionally substantially centrally between the two support elements (38, 40, 50, 52) between the first longitudinal bracing element (88) and the second longitudinal bracing element (90).

5. The solar installation mounting device according to claim 3, **characterized in that** the truss module (80, 82) has a third longitudinal bracing element (92) which is arranged fixedly functionally between the two support elements (38, 40, 50, 52) below the first longitudinal bracing element (88), and has at least one vertical bracing element (96, 98) which is arranged functionally between the first longitudinal bracing element (88) and the third longitudinal bracing element (92).

6. The solar installation mounting device according to claim 5, **characterized in that** the truss module (80, 82) has two vertical bracing elements (96, 98) which are connected by a first end in a central region of the first longitudinal stiffening element (88) and are connected by their second end in each case to opposite ends of the third longitudinal bracing element (92) which face the respective support element (38, 40).

7. The solar installation mounting device according to one of claims 3-6, **characterized in that** the first longitudinal bracing element (88) has at least one solar module connecting element (104) which is preferably fixedly connected in a central region of a first longitudinal bracing element (88) of a truss module (80, 82).

8. The solar installation mounting device according to any one of the preceding claims, **characterized in that** the stiffening module (60) has further first stiffening units (62, 64, 66, 68, 70) which in each case preferably have a distance of 6 m to 12 m from the respectively adjacent stiffening units (62, 64, 66, 68, 70).

9. The solar installation mounting device according to any one of the preceding claims, **characterized in that** the stiffening module (60) has a central stiffening unit (106) which in each case connects a support element group (108, 110) of three support elements (42, 44, 46, 54, 56, 58) of the two mounting rows (36, 48) to one another and for this purpose has three transverse stiffening elements (112, 114, 116) which are arranged in each case between two of the support elements (42, 44, 46, 54, 56, 58) of the two mounting rows (36, 48).

10. The solar installation mounting device according to claim 9, **characterized in that** the central support elements (44, 56) of the support element groups (108, 110) are formed as a double support element.

11. The solar installation mounting device according to claim 9, **characterized in that** the central stiffening unit (106) is formed as a double stiffening unit which has, for each mounting row (36, 48), in each case two truss modules (132, 134, 136, 138) which are arranged in each case between the central support element (44, 56) and an outer support element (42, 46, 54, 58).

12. The solar installation mounting device according to claim 9, **characterized in that** a central transverse stiffening element (114) is formed as a double transverse stiffening element composed of two supports (118, 120) which are arranged one above the other and which are connected to one another via transverse struts (122).

13. A solar installation system having a solar installation mounting device according to any one of the preceding claims with a stiffening module (60) which has a multiplicity of stiffening units (62, 64, 66, 68, 70, 106), **characterized by** a first holding device (24) and a multiplicity of solar modules (20) which are connected to the first holding device (24) and which are connected to support elements (38, 40, 42, 44, 46) of a first mounting row (36), and a second holding device (32) and a multiplicity of solar modules (22) which are connected to the second holding device (32) and which are connected to support elements (50, 52, 54, 56, 58) of a second mounting row (48).

14. The solar installation system according to claim 13, **characterized in that** the solar modules (20, 22) are supported in each case pivotably with respect to an axis of rotation by means of the holding device (24, 32).

15. The solar installation system according to claim 14, **characterized by** at least one drive unit (30) for pivoting the solar modules (20, 22), which drive unit (30) is connected in a central region of a central stiffening unit (106) of the stiffening module (60).

## Revendications

1. Dispositif de montage d'installation solaire, en particulier destiné à être posé sur un sol mou (18), comprenant une première rangée de supports (36) d'éléments de support (38, 40, 42, 44, 46) qui sont fixés au sol (18), et comprenant une deuxième rangée de supports (48) d'éléments de support (50, 52, 54, 56, 58) qui sont fixés au sol (18) et qui sont disposés dans une direction transversale à distance de la première rangée de supports (36) d'éléments de support (38, 40, 42, 44, 46), comprenant un module de rigidification (60) par le biais duquel les éléments de support (38, 40, 42, 44, 46) de la première rangée de supports (36) et les éléments de support (50, 52, 54, 56, 58) de la deuxième rangée de supports (48) sont directement connectés les uns aux autres, et qui est prévu pour supporter des forces latérales agissant sur une rangée de supports (36, 48) au niveau de l'autre rangée de supports (36, 48) afin de réduire, de préférence d'empêcher, des couples de rotation dans les éléments de support (38, 40, 42, 44, 46, 50, 52, 54, 56, 58), le module de rigidification (60) présentant une première unité de rigidification (62, 64, 66, 68, 70) qui connecte à chaque fois une paire d'éléments de support (72, 74) des deux rangées de supports (36, 48) l'une à l'autre et présente à cet effet deux éléments de rigidification transversaux (76, 78) qui sont disposés à chaque fois entre deux des éléments de support (38, 40, 50, 52) des deux rangées de supports (26, 48), **caractérisé en ce que** l'unité de rigidification (62, 64, 66, 68, 70) présente pour chaque rangée de supports (36, 48) un module en treillis (80, 82) qui connecte les éléments de support (38, 40, 50, 52) de la paire d'éléments de support correspondante (72, 74) l'un à l'autre et aux éléments de rigidification transversaux (76, 78).

2. Dispositif de montage d'installation solaire selon la revendication 1, **caractérisé en ce que** le module en treillis (80, 82) présente au moins deux éléments d'entretoisement transversaux (84, 86) qui sont disposés à chaque fois de manière fixe entre une extrémité supérieure d'un élément de support correspondant (38, 40, 50, 52) et l'élément de rigidification transversal (76, 78).

3. Dispositif de montage d'installation solaire selon la revendication 1, **caractérisé en ce que** le module en treillis (80, 82) présente au moins un premier élément d'entretoisement longitudinal (88) qui est disposé de manière fixe de manière fonctionnelle entre les deux éléments de support (38, 40, 50, 52), et un deuxième élément d'entretoisement longitudinal (90) qui est disposé de manière fonctionnelle de manière espacée dans la direction transversale par rapport aux éléments de support (38, 40, 50, 52) entre les deux éléments de rigidification transversaux (76, 78).

4. Dispositif de montage d'installation solaire selon la revendication 3, **caractérisé en ce que** le module en treillis (80, 82) présente un troisième élément d'entretoisement transversal (94) qui est disposé de manière fonctionnelle de manière sensiblement centrale entre les deux éléments de support (38, 40, 50, 52) entre le premier élément d'entretoisement longitudinal (88) et le deuxième élément d'entretoisement longitudinal (90).

5. Dispositif de montage d'installation solaire selon la revendication 3, **caractérisé en ce que** le module en treillis (80, 82) présente un troisième élément d'entretoisement longitudinal (92) qui est disposé de manière fixe de manière fonctionnelle en dessous du premier élément d'entretoisement longitudinal (88) entre les deux éléments de support (38, 40, 50, 52), et présente au moins un élément d'entretoisement vertical (96, 98) qui est disposé de manière fonctionnelle entre le premier élément d'entretoisement longitudinal (88) et le troisième élément d'entretoisement longitudinal (92).

6. Dispositif de montage d'installation solaire selon la revendication 5, **caractérisé en ce que** le module en treillis (80, 82) présente deux éléments d'entretoisement verticaux (96, 98) qui sont reliés par une première extrémité dans une région centrale du premier élément de rigidification longitudinal (88) et sont reliés par leur deuxième extrémité à chaque fois à des extrémités opposées, tournées vers l'élément de support respectif (38, 40), du troisième élément d'entretoisement longitudinal (92).

7. Dispositif de montage d'installation solaire selon l'une quelconque des revendications 3 à 6, **caractérisé en ce que** le premier élément d'entretoisement longitudinal (88) présente au moins un élément de liaison de module solaire (104) qui est relié de manière fixe de préférence dans une région centrale d'un premier élément d'entretoisement longitudinal (88) d'un module en treillis (80, 82).

8. Dispositif de montage d'installation solaire selon l'une quelconque des revendications précédentes, **caractérisé en ce que** le module de rigidification (60) présente d'autres premières unités de rigidification (62, 64, 66, 68, 70) qui présentent à chaque fois de préférence une distance de 6 m à 12 m par rapport aux unités de rigidification à chaque fois adjacentes (62, 64, 66, 68, 70).

9. Dispositif de montage d'installation solaire selon l'une quelconque des revendications précédentes, **caractérisé en ce que** le module de rigidification (60) présente une unité de rigidification centrale (106) qui relie à chaque fois un groupe d'éléments de support (108, 110) de trois éléments de support (42, 44, 46, 54, 56, 58) des deux rangées de support (36, 48) les uns aux autres et présente à cet effet trois éléments de rigidification transversaux (112, 114, 116) qui sont à chaque fois disposés entre deux des éléments de support (42, 44, 46, 54, 56, 58) des deux rangées de support (36, 48).

10. Dispositif de montage d'installation solaire selon la revendication 9, **caractérisé en ce que** les éléments de support centraux (44, 56) des groupes d'éléments de support (108, 110) sont réalisés sous forme d'élément de support double.

11. Dispositif de montage d'installation solaire selon la revendication 9, **caractérisé en ce que** l'unité de rigidification centrale (106) est réalisée sous forme d'unité de rigidification double qui présente à chaque fois pour chaque rangée de support (36, 48) deux modules en treillis (132, 134, 136, 138) qui sont à chaque fois disposés entre l'élément de support central (44, 56) et un élément de support extérieur (42, 46, 54, 58).

12. Dispositif de montage d'installation solaire selon la revendication 9, **caractérisé en ce qu'**un élément de rigidification transversal central (114) est réalisé sous forme d'élément de rigidification transversal double composé de deux supports disposés l'un au-dessus de l'autre (118, 120) qui sont reliés l'un à l'autre par le biais d'entretoises transversales (122).

13. Système d'installation solaire comprenant un dispositif de montage d'installation solaire selon l'une quelconque des revendications précédentes avec un module de rigidification (60) qui présente une pluralité d'unités de rigidification (62, 64, 66, 68, 70, 106), **caractérisé par** un premier dispositif de retenue (24) et une pluralité de modules solaires (20) reliés au premier dispositif de retenue (24), qui sont reliés à des éléments de support (38, 40, 42, 44, 46) d'une première rangée de support (36), et un deuxième dispositif de retenue (32) et une pluralité de modules solaires (22) reliés au deuxième dispositif de retenue (32), qui sont reliés à des éléments de support (50, 52, 54, 56, 58) d'une deuxième rangée de support (48).

14. Système d'installation solaire selon la revendication 13, **caractérisé en ce que** les modules solaires (20, 22) sont logés à chaque fois de manière pivotante par rapport à un axe de rotation au moyen du dispositif de retenue (24, 32).

15. Système d'installation solaire selon la revendication 14, **caractérisé par** au moins une unité d'entraînement (30) pour le pivotement des modules solaires (20, 22), qui est reliée dans une région centrale d'une unité de rigidification centrale (106) du module de rigidification (60).
